# EUROPEAN PATENT SPECIFICATION

(11) **EP 4 580 299 B1**
(45) Date of publication and mention of the grant of the patent: **02.12.2026**
(21) Application number: 23870040.5
(22) Date of filing: 18.08.2023
(51) Int. Cl.: H04W 74/00, H04W 74/0833, H04L 1/08, H04B 7/06

(54) **METHOD, APPARATUS AND SYSTEM FOR REPEATED TRANSMISSION OF PREAMBLE, AND MEDIUM**
VERFAHREN, VORRICHTUNG UND SYSTEM ZUR WIEDERHOLTEN ÜBERTRAGUNG EINER PRÄAMBEL UND MEDIUM
PROCÉDÉ, APPAREIL ET SYSTÈME DE TRANSMISSION RÉPÉTÉE DE PRÉAMBULE, AINSI QUE SUPPORT

(30) Priority: 26.09.2022 CN 202211173349
(43) Date of publication of application: 02.07.2025
(73) Proprietor: Honor Device Co., Ltd., Shenzhen, Guangdong 518040 (CN)
(72) Inventor: ZHANG, Jian, Shenzhen, Guangdong 518040 (CN)
(74) Representative: Isarpatent
(86) International application number: PCT/CN2023/113824
(87) International publication number: WO 2024/066795

(56) References cited:
- WO-A1-2022/064462
- CN-A- 110 832 942
- CN-A- 113 973 370
- CN-A- 114 073 163
- JP-A- 2019 212 957
- US-A1- 2022 038 935
- US-A1- 2022 046 726

## Description

Priority is claimed to Chinese Patent Application No. 202211173349.6, filed with the China National Intellectual Property Administration on September 26, 2022 and entitled "PREAMBLE REPETITION TRANSMISSION METHOD, APPARATUS, SYSTEM, AND MEDIUM".

### TECHNICAL FIELD

This specification generally relates to the field of communication technologies, and the invention, in particular, relates to preamble repetition transmission methods.

### BACKGROUND

Random access (RA) is a procedure in which user equipment (UE) requests access to a network device, receives a response message from the network device, and allocates an access channel.

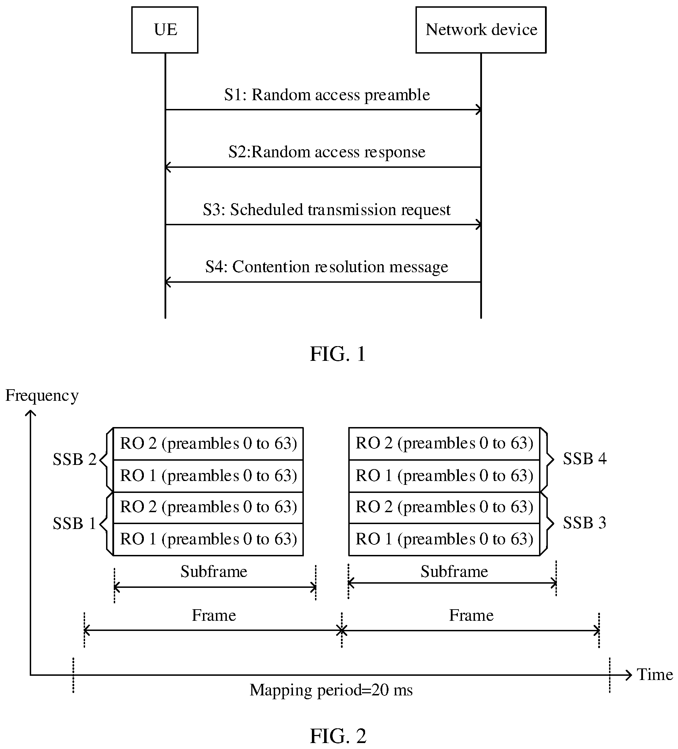

As shown in FIG. 1, in a new radio (NR) system in 5th generation (5G) mobile communication, a random access procedure may include the following four steps: S1: The UE selects one physical random access channel (PRACH) resource based on random access configuration information and a downlink measurement result, and transmits a random access preamble to the network device on the PRACH resource. S2: The network device returns a random access response message to the UE. S3: The UE transmits a scheduled transmission request, for example, a radio resource control (RC) connection request message, to the network device. S4: The network device returns a contention resolution message to the UE.

For the random access procedure, because transmit power of a base station is usually large, a probability that signal strength is weak during transmission of downlink (DL) data is low. However, because transmit power of the UE is usually limited, during transmission of uplink (UL) data, especially when the preamble is transmitted to the network device on the PRACH resource, a case in which signal strength is weak easily occurs, and consequently, the random access fails.

WO 2022/064462 A1 discloses apparatuses, methods, and systems for configuring random access procedures. One method includes receiving, at a user equipment, a first configuration from a network. The first configuration corresponds to performing a physical random access channel transmission on multiple random access channel occasions. The method also includes receiving a second configuration from the network. The second configuration corresponds to performing Msg3 repetition, MsgA repetition, or a combination thereof. The method includes performing a random access procedure based on the first configuration and the second configuration.

US 2022/0038935 A1 discloses various techniques for improving coverage for a physical random access channel (PRACH). Additionally, examples provide techniques for repetition of a channel state information (CSI) report on a physical uplink shared channel (PUSCH) for coverage enhancement.

US 2022/0046726 A1 discloses various beam-specific coverage enhancement techniques for a random access channel (RACH) procedure. A scheduling entity can apply a beam-specific coverage enhancement technique to one or more random access messages associated with a random access procedure. The beam-specific coverage enhancement technique can be selectively applied on a predetermined beam or a subset of beams.

### SUMMARY

The object of the present invention is to provide preamble repetition transmission methods to resolve a technical problem that random access fails due to weak signal strength when a preamble is transmitted to a network device on a PRACH resource. This object is solved by the attached independent claims and further embodiments and improvements of the invention are listed in the attached dependent claims. Hereinafter, up to the "brief description of the drawings", expressions like "...aspect according to the invention", "according to the invention", or "the present invention", relate to technical teaching of the broadest embodiment as claimed with the independent claims. Expressions like "implementation", "design", "optionally", "preferably", "scenario", "aspect" or similar relate to further embodiments as claimed, and expressions like "example", "...aspect according to an example", "the disclosure describes", or "the disclosure" describe technical teaching which relates to the understanding of the invention or its embodiments, which, however, is not claimed as such.

To achieve the foregoing objective, in particular the following technical solutions are used in this application.

According to a first aspect according to the invention, the invention provides the following preamble repetition transmission method:

A terminal device receives configuration information from a network device, where the configuration information indicates PRACH resources that are on a same beam or different beams and that are used for repetition transmission, and the PRACH resources include: a preamble used for the repetition transmission, and an RO used for repeatedly transmitting the preamble. The terminal device repeatedly transmits the same preamble on a plurality of ROs of one beam or on same corresponding ROs of a plurality of beams based on the configuration information.

Based on the foregoing solution, when the network device configures the PRACH resources used for the repetition transmission on the same beam, the terminal device may repeatedly transmit a PRACH a plurality of times on the same beam; or when the network device configures the PRACH resources for the repetition transmission on the different beams, the terminal device may repeatedly transmit a PRACH a plurality of times on the different beams. Regardless of whether the PRACH is repeatedly transmitted the plurality of times on the same beam or is repeatedly transmitted the plurality of times on the different beams, each PRACH carries the same preamble, so that a plurality of PRACHs are combined to generate a gain. Therefore, coverage enhancement for the PRACH is achieved, and a success rate of random access is further improved.

According to the invention, the configuration information includes a preamble configuration parameter. Correspondingly, the method further includes the following steps: The terminal device generates a first resource pool based on the preamble configuration parameter. The first resource pool includes one or more preambles used for the repetition transmission. It may be understood that a preamble in an existing resource pool is not used for repetition transmission, and a preamble resource pool specially used for repetition transmission is generated, so that the terminal device can randomly select one preamble therefrom as a preamble repeatedly transmitted on a plurality of ROs of one beam or on same corresponding ROs of a plurality of beams.

According to the invention, the preamble configuration parameter includes: a quantity of preambles used for the repetition transmission, a quantity of bits by which a root sequence of the preamble used for the repetition transmission is shifted each time, and a root index of the preamble used for the repetition transmission. Correspondingly, that the terminal device generates a first resource pool based on the preamble configuration parameter includes: The terminal device generates the first resource pool based on the quantity of preambles used for the repetition transmission, the quantity of bits by which the root sequence of the preamble used for the repetition transmission is shifted each time, and the root index of the preamble used for the repetition transmission. It may be understood that the network device configures a set of new parameters for the terminal device, so that the terminal device can generate a new resource pool based on the set of new parameters.

According to the invention, the preamble configuration parameter alternatively also includes: a start index of the preamble used for the repetition transmission, and a quantity of preambles used for the repetition transmission. Correspondingly, that the terminal device generates a first resource pool based on the preamble configuration parameter includes: The terminal device divides the first resource pool from a second resource pool based on the start index of the preamble used for the repetition transmission and the quantity of preambles used for the repetition transmission. The second resource pool is generated based on the following parameters: a quantity of preambles used for non-repetition transmission, a quantity of bits by which a root sequence of the preamble used for the non-repetition transmission is shifted each time, and a root index of the preamble used for the non-repetition transmission. It may be understood that the network device configures, for the terminal device, the start index of the preamble used for the repetition transmission and the quantity of the preambles used for the repetition transmission, so that an existing preamble resource can be reused for a preamble resource pool used for the repetition transmission, in other words, one preamble resource pool specially used for the repetition transmission is separately divided from an existing resource pool.

In some embodiments, the configuration information may further include: a first parameter and a second parameter, where the first parameter indicates a quantity N of preamble repetition transmissions on the same beam, the second parameter indicates an RO interval at which the preamble is repeatedly transmitted on the same beam, and N is an integer greater than or equal to 2. Correspondingly, that the terminal device repeatedly transmits the same preamble on a plurality of ROs of one beam based on the configuration information includes: The terminal device determines N ROs in the one beam based on the first parameter and the second parameter, and repeatedly transmits the same preamble on the N ROs. It may be understood that the network device configures the first parameter and the second parameter for the terminal device, so that the terminal device can calculate, based on the first parameter and the second parameter, a group used for repeatedly transmitting the same preamble on the same beam.

In some embodiments, the N ROs belong to a same group, and the same group is one group randomly selected by the terminal device from groups included in the one beam. Correspondingly, before the determining N ROs in the one beam, the method may further include the following steps: The terminal device determines a total quantity M of ROs included in the same beam in preset time. The terminal device determines, by using the following formula, each group that is in the same beam and that is used for repeatedly transmitting the preamble: $\left\{\left(s+nk\right)mod M\right\} ,$ where
s represents a 1^{st} RO mapped in each group in the same beam, n = (0, 1..., N - 1) , k represents the RO interval at which the preamble is repeatedly transmitted on the same beam, mod is a modulo operator, and s ≤ M.

In some embodiments, the preset time may be a mapping period or a mapping pattern period.

In some embodiments, the ROs in the same beam in the preset time may be sorted according to a rule of first frequency domain and then time domain, or may be sorted according to a rule of first time domain and then frequency domain. The rule of first frequency domain and then time domain is stipulated by a protocol, and the rule of first time domain and then frequency domain is configured by the network device.

In some embodiments, when the configuration information further includes a preset rule, the ROs included in the same beam in the preset time are sorted according to the rule of first time domain and then frequency domain; or when the configuration information does not include the preset rule, the ROs included in the same beam in the preset time are sorted according to the rule of first frequency domain and then time domain. The preset rule is that the ROs in the same beam in the preset time are sorted according to the rule of first time domain and then frequency domain.

In some embodiments, time domain resources of the ROs in the one group are the same, and frequency domain resources of the ROs in the one group are different; or time domain resources of the ROs in the one group are different, and frequency domain resources of the ROs in the one group are the same; or ROs that are in the one group and that have different time domain resources and different frequency domain resources exist.

In some embodiments, the one beam used for repeatedly transmitting the same preamble is a strongest beam, and the strongest beam is a beam with strongest received signal strength on the terminal device among all beams transmitted by the network device. It may be understood that the terminal device implicitly informs the network device of an initial downlink beam by selecting to repeatedly transmit the same preamble on the plurality of ROs of the strongest beam.

In some embodiments, the configuration information may further include: a third parameter, where the third parameter indicates whether to enable the repetition transmission of the same preamble on the same beam. It may be understood that the third parameter is equivalent to an enable switch. The parameter is set, to trigger the terminal device to perform a procedure of multiple PRACH repetition transmissions on a same beam.

In some embodiments, the configuration information may further include: a fourth parameter, where the fourth parameter indicates a quantity K of beams for multi-beam preamble repetition transmission, and K is an integer greater than or equal to 2. The preamble configuration parameter includes: the quantity of preambles used for the repetition transmission. Correspondingly, that the terminal device repeatedly transmits the same preamble on same corresponding ROs of a plurality of beams based on the configuration information includes: The terminal device determines a preamble corresponding to each of the K beams based on the fourth parameter, the first resource pool, and the quantity of preambles used for the repetition transmission. The terminal device repeatedly transmits the same preamble on same corresponding ROs of the K beams. The K beams include a strongest beam, the strongest beam is a beam with strongest received signal strength on the terminal device among all beams transmitted by the network device, and the same preamble is one preamble randomly selected by the terminal device from a preamble corresponding to the strongest beam. It may be understood that the network device configures the fourth parameter for the terminal device, so that the terminal device can calculate, based on the fourth parameter, the same corresponding ROs used for repeatedly transmitting the same preamble on the different beams.

In some embodiments, a quantity of preambles corresponding to each of the K beams is equal to: a value obtained by dividing the quantity of preambles used for the repetition transmission by the quantity K. It may be understood that a preamble corresponding to each beam is determined, so that a preamble corresponding to the strongest beam can be transmitted on the same corresponding ROs of the K beams, and the network device is implicitly notified of information about a beam used by the terminal device.

In some embodiments, the fourth parameter may further indicate to reuse the same preamble every K beams. It may be understood that the preamble used for the repetition transmission may be reused every K beams.

In some embodiments, signal strength of the K beams is greater than signal strength of another beam transmitted by the network device. It may be understood that the K beams with strongest signal strength are selected, so that a stronger gain can be generated, and a success rate of random access can be improved.

In some embodiments, the K beams include: the strongest beam, a beam broadcast before the strongest beam, and a beam broadcast after the strongest beam; or the K beams include: the strongest beam, and a beam broadcast before the strongest beam; or the K beams include: the strongest beam, and a beam broadcast after the strongest beam.

In some embodiments, the configuration information may further include: a fifth parameter, where the fifth parameter indicates whether to enable the repetition transmission of the same preamble on the different beams. It may be understood that the fifth parameter is equivalent to an enable switch. The parameter is set, so that the terminal device can be triggered to perform a procedure of multiple PRACH repetition transmissions on different beams.

In some embodiments, the same corresponding ROs of the K beams are: ROs that have a same number and that are of the plurality of beams.

According to a second aspect according to the invention, the invention also provides the following further preamble repetition transmission method:

A network device transmits configuration information to a terminal device, where the configuration information indicates PRACH resources that are on a same beam or different beams and that are used for repetition transmission, and the PRACH resources include: a preamble used for the repetition transmission, and an RO used for repeatedly transmitting the preamble. The network device receives, from the terminal device, a plurality of PRACHs on a plurality of ROs from one beam or a plurality of PRACHs on ROs from a plurality of beams, where each of the plurality of PRACHs carries the same preamble.

Based on the foregoing solution, the network device configures, for UE, the PRACH resources used for the repetition transmission on the same beam or the different beams, so that the UE can repeatedly transmit a PRACH a plurality of times on the same beam or the different beams. Because each PRACH carries the same preamble, the network device combines a plurality of PRACHs to generate a gain. Therefore, coverage enhancement for the PRACH is achieved, and a success rate of random access is further improved.

According to the invention, the configuration information includes a preamble configuration parameter, and the preamble configuration parameter is used for generating a preamble resource pool, that is, a first resource pool, for the repetition transmission. The first resource pool includes one or more preambles used for the repetition transmission. It may be understood that a preamble in an existing resource pool is not used for repetition transmission, and a preamble resource pool specially used for repetition transmission is generated, so that the terminal device can randomly select one preamble therefrom as a same preamble repeatedly transmitted on a plurality of ROs of one beam or on same corresponding ROs of a plurality of beams.

Also according to the invention, the preamble configuration parameter includes: a quantity of preambles used for the repetition transmission, a quantity of bits by which a root sequence of the preamble used for the repetition transmission is shifted each time, and a root index of the preamble used for the repetition transmission. It may be understood that the network device configures a set of new parameters for the terminal device, so that the terminal device can generate a new resource pool based on the set of new parameters.

Also according to another alternative of the invention, the preamble configuration parameter includes: a start index of the preamble used for the repetition transmission, and a quantity of preambles used for the repetition transmission. It may be understood that the network device configures, for the terminal device, the start index of the preamble used for the repetition transmission and the quantity of the preambles used for the repetition transmission, so that an existing preamble resource can also be reused for a preamble resource pool used for the repetition transmission, in other words, one preamble resource pool specially used for the repetition transmission is separately divided from an existing resource pool.

In some embodiments, the configuration information may include: a first parameter and a second parameter, where the first parameter indicates a quantity N of preamble repetition transmissions on the same beam, and the second parameter indicates an RO interval at which the preamble is repeatedly transmitted on the same beam. It may be understood that the network device configures the first parameter and the second parameter for the terminal device, so that the terminal device can calculate, based on the first parameter and the second parameter, a group used for repeatedly transmitting the same preamble on the same beam.

In some embodiments, the configuration information may further include a preset rule, and the preset rule is that the ROs included in the same beam in preset time are sorted according to a rule of first time domain and then frequency domain.

In some embodiments, the preset time may be a mapping period or a mapping pattern period.

In some embodiments, the configuration information may further include: a third parameter, where the third parameter indicates whether to enable the repetition transmission of the same preamble on the same beam. It may be understood that the third parameter is equivalent to an enable switch. The network device sets the parameter, so that the terminal device can be triggered to perform a procedure of multiple PRACH repetition transmissions on a same beam.

In some embodiments, the configuration information may further include: a fourth parameter, where the fourth parameter indicates a quantity K of beams for multi-beam preamble repetition transmission. It may be understood that the network device configures the fourth parameter for the terminal device, so that the terminal device can calculate, based on the fourth parameter, the same corresponding ROs used for repeatedly transmitting the same preamble on the different beams.

In some embodiments, the fourth parameter may further indicate to reuse the same preamble every K beams. It may be understood that the preamble used for the repetition transmission may be reused every K beams.

In some embodiments, the configuration information may further include: a fifth parameter, where the fifth parameter indicates whether to enable the repetition transmission of the same preamble on the different beams. It may be understood that the fifth parameter is equivalent to an enable switch. The parameter is set, to trigger the terminal device to perform a procedure of multiple PRACH repetition transmissions on different beams.

According to the invention, the one beam is a strongest beam, or the plurality of beams include a strongest beam. The strongest beam is a beam with strongest received signal strength on the terminal device among all beams transmitted by the network device. Correspondingly, the method further includes the following step: The network device transmits downlink data to the terminal device on the strongest beam. It may be understood that, after the network device receives a PRACH signal from the strongest beam or from a plurality of beams including the strongest beam, the network device may determine the strongest beam of the terminal device based on a mapping relationship between a PRACH and the beam, and transmit downlink data to the terminal device on the strongest beam.

According to a third aspect, wherein this aspect and any of its implementations and options below are not claimed but contribute to the general understanding of the invention as claimed, an example of this application provides a communication apparatus. The communication apparatus may include a processor, a communication interface, and a memory coupled to the processor and the communication interface. The memory stores instructions; and when the processor executes the instructions, the communication apparatus is caused to perform the preamble repetition transmission method according to any one of the first aspect, or the communication apparatus is caused to perform the preamble repetition transmission method according to any one of the second aspect.

According to a fourth aspect, wherein this aspect and any of its implementations and options below are not claimed but contribute to the general understanding of the invention as claimed, another example of this application provides a communication system. The communication system may include a terminal device and a network device. The terminal device is configured to perform the preamble repetition transmission method according to any one of the first aspect, and the network device is configured to perform the preamble repetition transmission method according to any one of the second aspect.

According to a fifth aspect, wherein this aspect and any of its implementations and options below are not claimed but contribute to the general understanding of the invention as claimed, a still further example of this application provides a computer-readable storage medium. The computer-readable storage medium stores a computer program. When the computer program is run on a terminal device, the terminal device is caused to perform the preamble repetition transmission method according to any one of the first aspect; or when the computer program is run on a network device, the network device is caused to perform the preamble repetition transmission method according to any one of the second aspect.

According to a sixth aspect, wherein this aspect and any of its implementations and options below are not claimed but contribute to the general understanding of the invention as claimed, another example of this application provides a chip. The chip is coupled to a memory. The chip is configured to read and execute a computer program stored in the memory, to implement the preamble repetition transmission method according to any one of the first aspect or the second aspect.

According to a seventh aspect, wherein this aspect and any of its implementations and options below are not claimed but contribute to the general understanding of the invention as claimed, a computer program product is provided. When the computer program product is run on a computer, the computer is caused to perform the preamble repetition transmission method according to any one of the first aspect or the second aspect.

It may be understood that, for beneficial effects of the third aspect to the seventh aspect, reference may be made to the related descriptions in the first aspect and the second aspect. Details are not described herein again.

In the following description, features which in the above summary of the invention have been marked as "not claimed" or "according to the invention" are also hereinafter, when they are described and explained with reference to the drawings, to be understood as "not claimed" or "not part of the invention" or "according to the invention". Even if sometimes in the description of the embodiments below, features marked above "according to the invention" or "the invention" are referred to in connection with the words "can" or "may" or other expressions which contain the notion of them being "optional", it should be understood that indeed such features are considered essential to the invention as claimed and not optional.

### BRIEF DESCRIPTION OF DRAWINGS

FIG. 1 is a flowchart of four-step random access according to an embodiment of this application;
FIG. 2 is a mapping diagram of ROs and an SSB according to an embodiment of this application;
FIG. 3 is another mapping diagram of an RO and SSBs according to an embodiment of this application;
FIG. 4 is a diagram of a scenario in which UE selects an SSB according to an embodiment of this application;
FIG. 5 is a diagram of a communication system according to an embodiment of this application;
FIG. 6 is a diagram of a hardware structure of a communication apparatus according to an embodiment of this application;
FIG. 7 is a flowchart of a preamble repetition transmission method according to an embodiment of this application;
FIG. 8 is a diagram of an existing preamble resource pool and a new preamble resource pool according to an embodiment of this application;
FIG. 9 is a diagram of a reused resource pool according to an embodiment of this application;
FIG. 10 is a diagram of repeatedly transmitting a preamble on a plurality of ROs of a same SSB according to an embodiment of this application;
FIG. 11 is a diagram of repeatedly transmitting a preamble on a plurality of ROs of different SSBs according to an embodiment of this application;
FIG. 12 is a flowchart of a method for repeatedly transmitting a PRACH a plurality of times on a same beam according to an embodiment of this application;
FIG. 13 is a diagram of grouping ROs in a same SSB according to an embodiment of this application;
FIG. 14 is another diagram of grouping ROs in a same SSB according to an embodiment of this application;
FIG. 15 is still another diagram of grouping ROs in a same SSB according to an embodiment of this application;
FIG. 16 is yet another diagram of grouping ROs in a same SSB according to an embodiment of this application;
FIG. 17 is a diagram of transmitting a preamble on one group of ROs of a same SSB according to an embodiment of this application;
FIG. 18 is a diagram of a scenario in which a strongest beam changes due to movement of UE according to an embodiment of this application;
FIG. 19 is a flowchart of a method for repeatedly transmitting a PRACH a plurality of times on different beams according to an embodiment of this application;
FIG. 20 is a diagram of a preamble resource pool used for multi-beam repetition transmission according to an embodiment of this application;
FIG. 21 is a diagram of a scenario in which a same preamble is repeatedly transmitted on N beams according to an embodiment of this application;
FIG. 22 is a diagram of a scenario in which two UE repeatedly transmit preambles on a plurality of SSBs according to an embodiment of this application;
FIG. 23 is a diagram of a scenario in which a preamble is repeatedly transmitted on a plurality of ROs of a plurality of beams according to an embodiment of this application;
FIG. 24 is a diagram of ROs of all SSBs arranged in ascending order within preset time according to an embodiment of this application;
FIG. 25 is a diagram of a structure of an apparatus according to an embodiment of this application; and
FIG. 26 is a diagram of a structure of another apparatus according to an embodiment of this application.

### DESCRIPTION OF EMBODIMENTS

To facilitate understanding of the methods provided in embodiments of this application, technical terms involved in embodiments of this application are described.

### 1. PRACH

The PRACH is an access channel in a case in which UE starts to initiate a call. After the UE receives a random access response message from a network device, the UE transmits an RRC connection request message on the PRACH channel based on information indicated by the network device, to establish an RRC connection. Usually, one PRACH may include one preamble.

### 2. Random access preamble

The preamble is a Zadd Off Chu (ZC) sequence: {x(0), x(1), ..., x(L_{RA} -1)} with a length L_{RA}. The preamble may be classified into two types: a long preamble (long preamble) and a short preamble (short preamble). The long preamble is classified into four formats: a format 0, a format 1, a format 2, and a format 3. The short preamble is classified into nine types: A1, A2, A3, B1, B2, B3, B4, C0, and C2. In time domain, one preamble includes: one cyclic prefix (cyclic prefix, CP), one preamble sequence (preamble sequence), and one empty guard period (guard period).

Currently, there are two methods for generating the ZC sequence: generation based on different root sequence numbers (root sequence numbers), that is, generation by using the following formula 1; and generation through cyclic shifting (cyclic shift) based on a same root sequence number, that is, generation by using the following formula 2. ${x}_{u} \left(i\right) = {e}^{- \frac{jπui \left(i+1\right)}{{L}_{RA}}} , i = 0 , 1 , … , {L}_{RA} - 1$ (Formula 1). ${x}_{u , v} \left(n\right) = {x}_{u} \left(\left(n+{c}_{v}\right)mod {L}_{RA}\right)$ (Formula 2).

L_{RA} is a length of a root sequence, u is a root sequence number, and v is a quantity of cyclic shifts by using one root sequence number.

Usually, a network device configures a total quantity of preambles to be generated, a quantity N_{cs} of bits by which the root sequence is shifted each time, and a value of a root index (root index), and UE may generate a preamble based on these parameters. Further, the network device may further configure a time-frequency domain resource, for example, a random access signal occasion (RACH occasion, RO), used for transmitting the preamble. The RO is also referred to as a transmission occasion or a transmission opportunity. The UE may find an RO corresponding to each synchronization signal block (synchronization signal block, SSB) based on a network configuration. In addition, the network device may further configure a mapping relationship between the preamble, the RO, and an SSB, and so on.

The following describes, by using three parts, a manner of configuring the preamble by the network device.

### First part: generation of the preamble

The network device may configure the total quantity of preambles for the UE by using a parameter msgA-TotalNumberofRA-Preambles-r16. Usually, the total quantity of preambles is 64 by default. The 3GPP protocol stipulates that cyclic shifting is first performed on one root sequence, and if 64 preambles cannot be generated through this operation, cyclic shifting is performed on a next root sequence, until all 64 preambles are generated.

The network device may use a parameter zeroCorrelationZoneConfig to configure, for the UE, the quantity N_{cs} of bits by which the root sequence is shifted each time. In other words, the network device transmits the parameter zeroCorrelationZoneConfig to the UE, and the UE may determine N_{cs} corresponding to the parameter through table lookup.

The network device may use a parameter msgA-PRACH-RootSequenceIndex-r16 to configure the length L_{RA} of the root sequence and the root index (root index) for the UE. Usually, the parameter msgA-PRACH-RootSequenceIndex-r16 includes two parameters: the length L_{RA} and a value i. L_{RA} =839 or L_{RA} =139 . There is a correspondence between the value i and the root sequence number u (that is, the root index). To be specific, the network device indicates the value i to the UE, and the UE may determine the root sequence number u corresponding to the value i through table lookup, where i = 0, 1, ..., 15.

It is assumed that zeroCorrelationZoneConfig=6, L_{RA} =839 , and i = 20 . In this case, a method for generating the preamble is as follows:
For example, Table 1 shows N_{cs} values for an unrestricted set (unrestricted set), a restricted set type A (restricted set type A), and a restricted set type B (restricted set type B) corresponding to each of different values of zeroCorrelationZoneConfig.

**Table 1**

| Zero Correlation Zone Config | N_{cs} value | | |
|---|---|---|---|
| | Unrestricted set | Restricted set type A | Restricted set type B |
| 0 | 0 | 15 | 15 |
| 1 | 13 | 18 | 18 |
| 2 | 15 | 22 | 22 |
| 3 | 18 | 26 | 26 |
| 4 | 22 | 32 | 32 |
| 5 | 26 | 38 | 38 |
| **6** | **32** | 46 | 46 |
| 7 | 38 | 55 | 55 |
| 8 | 46 | 68 | 68 |
| 9 | 59 | 82 | 82 |
| 10 | 76 | 100 | 100 |
| 11 | 93 | 128 | 118 |
| 12 | 119 | 158 | 137 |
| 13 | 167 | 202 | - |
| 14 | 279 | 237 | - |
| 15 | 419 | - | - |

The UE may obtain the following by looking up Table 1: When zeroCorrelationZoneConfig=6, N_{cs} =32 for unrestricted sets.

The UE may perform rounding down on $\frac{{L}_{RA}}{{N}_{cs}} = \frac{839}{32}$, to obtain v = 0, 1, ..., 25 and Cv = V · N_{cs} = 0, 32, 64, ..., 832.

For example, Table 2 shows a partial correspondence between the root sequence number u and the value i.

**Table 2**

| i | Value of the root sequence number u as the value i changes | | | | | | | | | |
|---|---|---|---|---|---|---|---|---|---|---|
| 0 to 9 | 129 | 710 | 140 | 699 | 120 | 719 | 210 | 629 | 168 | 671 |
| 10 to 19 | 84 | 755 | 105 | 734 | 93 | 746 | 70 | 769 | 60 | 779 |
| 20 to 29 | **2** | 837 | 1 | 838 | 56 | 783 | 112 | 727 | 148 | 691 |
| 30 to 39 | 80 | 759 | 42 | 797 | 40 | 799 | 35 | 804 | 73 | 766 |
| 40 to 49 | 146 | 693 | 31 | 808 | 28 | 811 | 30 | 809 | 27 | 812 |
| 50 to 59 | 29 | 810 | 24 | 815 | 48 | 791 | 68 | 771 | 74 | 765 |

The UE may obtain the following by looking up Table 2: When i = 20, u = 2.

Then, the UE may perform cyclic shifting on the root sequence by using the foregoing formula 2, and the root sequence is shifted by 32 bits each time, to finally generate 64 preamble sequences. A specific implementation is as follows:

When u = 2, and v = 0, x_{2, 0}(n) = x₂(n).

When u = 2 , and v = 1, ${x}_{2 , 1} \left(0\right) = {e}^{\frac{jπ ∗ 32 ∗ 33}{839}}$, ${x}_{2 , 1} \left(1\right) = {e}^{\frac{jπ ∗ 32 ∗ 35}{839}}$, and ${x}_{2 , 1} \left(1\right) = {e}^{\frac{jπ ∗ 32 ∗ 35}{839}}$ ...

...

When u = 2, and v = 25, ...

So far, the UE uses a root sequence with u = 2, to generate 26 preamble sequences.

The UE may obtain the following by further looking up Table 2: When i = 21, u = 837. With reference to the foregoing method, the UE uses a root sequence with u = 837, to generate 26 preamble sequences.

The UE may obtain the following by further looking up Table 2: When i = 22, u = 1. With reference to the foregoing method, the UE uses a root sequence with u = 1, to generate 12 preamble sequences. Finally, a total of 64 preamble sequences are generated.

### Second part: RO determining

ROs of one SSB include a time domain resource of a transmission occasion (a time domain RO) and a frequency domain resource of the transmission occasion (a frequency domain RO).

When the network device configures a time domain RO of a PRACH, the network device may configure a parameter prach-ConfigurationIndex. The UE may determine the time domain transmission occasion of the PRACH based on the parameter prach-ConfigurationIndex through table lookup.

For example, as shown in Table 3, when prach-ConfigurationIndex=103, in a subframe #2 (a subframe with a sequence number of 2) and a subframe #7 (a subframe with a sequence number of 7) of all radio frames satisfying a frame number n_{f} mod x = y , the time domain RO of the PRACH has two PRACH slots in one subframe starting from a symbol 0, each PRACH slot includes six consecutive time domain ROs, and each time domain RO occupies two symbols.

x represents a PRACH time domain resource configuration period, y represents a radio frame with a PRACH time domain resource configured in the PRACH time domain resource configuration period, ${N}_{t}^{RA , slot}$ is a quantity of consecutive ROs in time domain in a slot of one PRACH, ${N}_{dur}^{RA}$ is a quantity of symbols occupied by each PRACH time-frequency resource. It should be noted that Table 1, Table 2, and Table 3 are all stipulated by the 3GPP protocol. In addition, Table 2 and Table 3 only show a part of information stipulated by the 3GPP protocol.

**Table 3**

| PRACH configuration index | Preamble format | n_{f} mod x = y | | Subframe sequence number | Start symbol | Quantity of PRACH slots in one subframe | ${N}_{t}^{RA , slot}$ | ${N}_{dur}^{RA}$ |
|---|---|---|---|---|---|---|---|---|
| | | x | y | | | | | |
| 0 | 0 | 16 | 1 | 1 | 0 | - | - | 0 |
| ... | | | | | | | | |
| 103 | A1 | 1 | 0 | 2, 7 | 0 | 2 | 6 | 2 |

When the network device configures the frequency domain RO of the PRACH, the network device may configure a parameter msg-FrequencyStart and a parameter msg-FDM. The UE may determine a start position of a frequency domain resource based on the parameter msg-FrequencyStart. In addition, the UE may determine, based on the parameter msg-FDM, a quantity of resource blocks (resource blocks, RBs) occupied in frequency domain. The total quantity of RBs occupied in frequency domain depends on a quantity of ROs mapped in frequency domain at a time point and a quantity of RBs occupied by each RO. The quantity of ROs mapped in frequency domain may be determined based on the parameter msg-FDM. For example, if msg-FDM=4, there may be four ROs in frequency domain. The quantity of RBs occupied by each RO may be determined through table lookup.

Third part: Mapping relationship between an RO and an SSB

In the 3GPP protocol, RO resources in different time-frequency domain are associated with an SSB index. The network device may configure a mapping relationship between RO resources and an SSB by using a parameter ssb-perRACH-OccasionAndCB-PreamblesPerSSB. This parameter is divided into two parts: ssb-perRACH-Occasion, which may indicate a quantity of SSBs corresponding to one RO; and CB-PreamblesPerSSB, which may indicate how many contention-based preambles are mapped on each SSB.

It is assumed that one RO corresponds to N SSBs, and each SSB corresponds to R contention-based preambles in each RO. If N<1, one SSB corresponds to 1/N consecutive ROs, each RO corresponds to R contention-based preambles, and a preamble index starts from 0. If N≥1, one RO is mapped on N SSBs, R contention-based preambles are mapped on an SSB in each RO, and a preamble index corresponding to an SSB n (0≤n≤N-1) starts from n*N_total_preamble/N. It should be noted that, when N<1, to be specific, one SSB corresponds to a plurality of ROs, the ROs are selected in ascending order according to a rule of first frequency domain and then time domain.

ssb-perRACH-OccasionAndCB-PreamblesPerSSB=(1/2, 64) is used as an example. As shown in FIG. 2, an example in which a mapping period is 20 milliseconds (ms) is used, and for a same time domain subframe, there are four ROs in frequency domain. One SSB corresponds to two ROs, and a quantity of contention-based preambles that can be used by each SSB in one RO is 64. For example, an SSB 1 corresponds to an RO 1 and an RO 2, the RO 1 may use contention-based preambles 0 to 63, and the RO 2 may use the contention-based preambles 0 to 63.

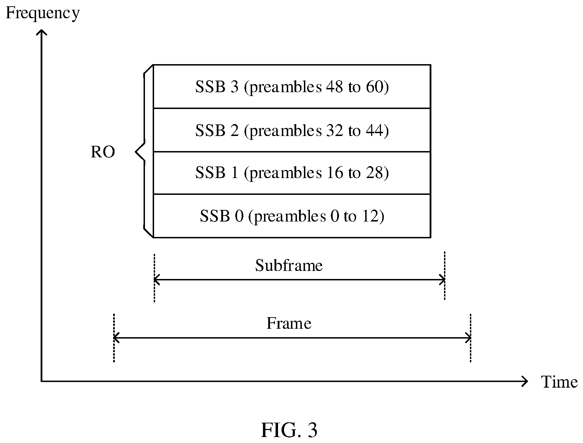

ssb-perRACH-OccasionAndCB-PreamblesPerSSB=(4, 13) is used as an example. As shown in FIG. 3, one cell transmits a total of four SSBs, and one RO corresponds to four SSBs. Each SSB corresponds to 13 contention-based preambles. The network device may determine an SSB index based on a range of detected preamble indexes, and a mapping relationship is {SSB 0: preambles 0 to 12; SSB 1: preambles 16 to 28; SSB 2: preambles 32 to 44; SSB 3: preambles 48 to 60}. In addition, non-contention-based preamble indexes, that is, remaining 12 preambles { 13 to 15, 29 to 31, 45 to 47, 61 to 63} obtained by removing contention-based preambles from 64 preambles, may also be calculated based on the mapping relationship.

Currently, after the UE generates a preamble based on a configuration parameter of the network device, the UE selects an SSB beam with a strongest signal from a plurality of SSB beams broadcast by the network device, and selects one RO from the SSB beam with the strongest signal based on a mapping relationship between the RO and an SSB index, to transmit the generated preamble. After receiving the preamble from the UE, the network device infers that the SSB beam is a best downlink beam of the UE based on the mapping relationship, and transmits DL data to the UE on the SSB beam.

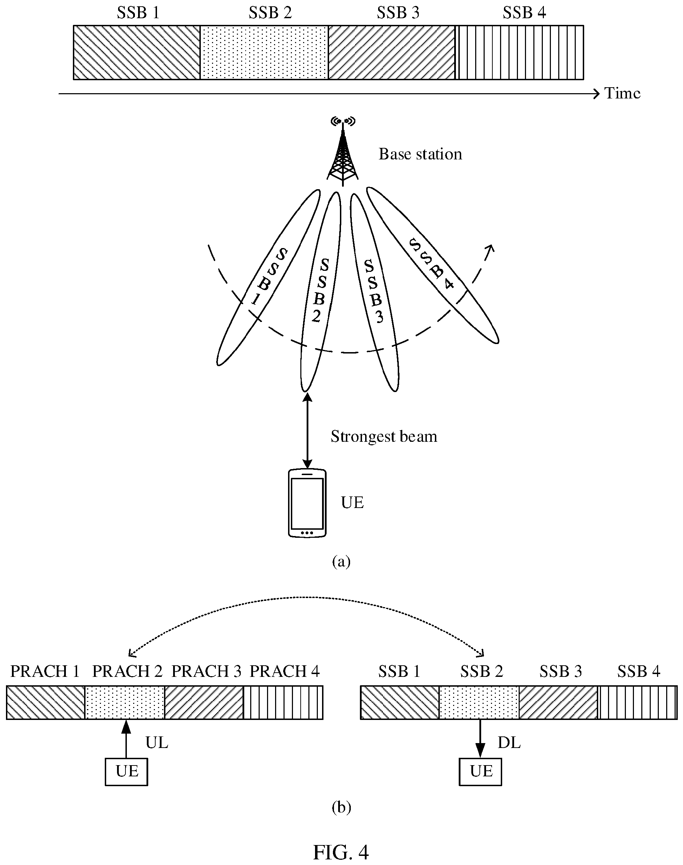

For example, as shown in (a) in FIG. 4, a base station may sequentially transmit, in different spatial directions in chronological order, four beams (beams) having directivity, that is, an SSB 1, an SSB 2, an SSB 3, and an SSB 4, and the UE measures signal strength of the four SSB beams. For example, the UE obtains through measurement that a signal of the SSB 2 is the strongest. Then, as shown in (b) in FIG. 4, the UE may select one RO from a plurality of ROs of the SSB 2 based on the mapping relationship between the RO and the SSB index, and transmit UL data to the base station on the RO, for example, transmit the preamble on a PRACH 2. The base station infers that the SSB 2 is a best downlink beam of the UE based on a mapping relationship between a RACH 2 and the SSB 2, and transmits DL data to the UE on the SSB 2.

In a 4-step random access procedure (4-step RACH procedure) shown in FIG. 1, because transmit power of the base station is usually large, a probability that signal strength is weak during transmission of DL data is low. However, because transmit power of the UE is limited, when the UE transmits UL data to the network device, especially when a preamble is transmitted to the network device on a PRACH resource, a case in which signal strength is weak easily occurs, and consequently, the random access fails.

To resolve the foregoing technical problem, an embodiment of this application provides a preamble repetition transmission method. The method may include the following steps: A network device configures, for a terminal device, PRACH resources, for example, a code domain resource, a time domain resource, and a frequency domain resource, used for repetition transmission. The terminal device generates, based on a configuration parameter, a preamble used for the repetition transmission, and determines an RO used for transmitting the preamble. Then, the terminal device repeatedly transmits a PRACH a plurality of times on a same beam, or repeatedly transmits a PRACH a plurality of times on different beams. Regardless of whether the PRACH is repeatedly transmitted the plurality of times on the same beam or is repeatedly transmitted the plurality of times on the different beams, each PRACH carries the same preamble, so that a plurality of PRACHs are combined to generate a gain (gain). Therefore, coverage enhancement (coverage enhancement) for the PRACH is achieved, and reliability of a communication link and a success rate of random access are further improved.

Technical solutions in embodiments of this application are described below with reference to accompanying drawings in embodiments of this application.

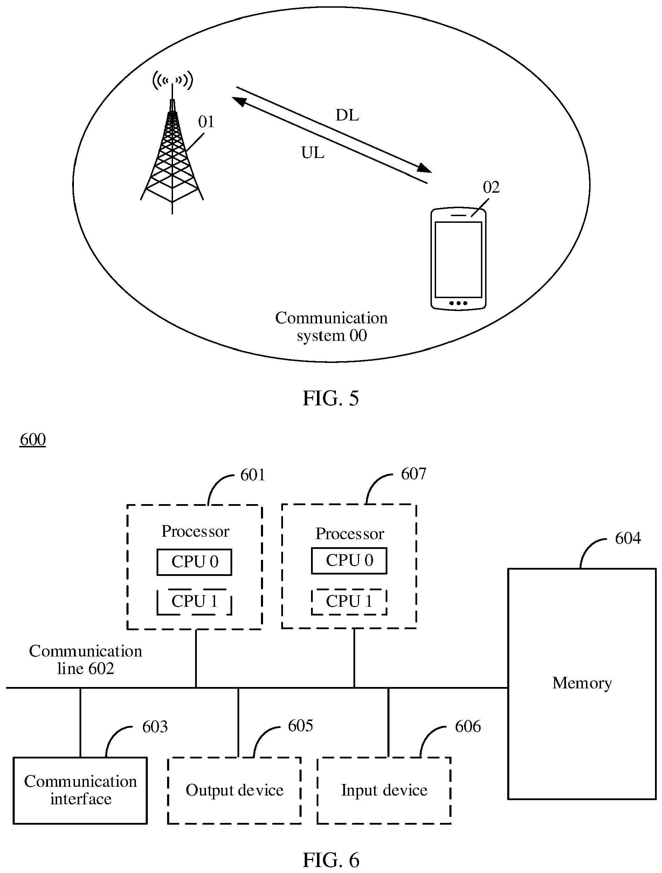

The preamble repetition transmission method according to this embodiment of this application is applicable to a communication system 00 shown in FIG. 5. The communication system 00 may be a cellular communication system, a universal mobile telecommunications system terrestrial radio access network (universal mobile telecommunications system terrestrial radio access network, UTRAN) system, an evolved universal mobile telecommunications system (universal mobile telecommunications system, UMTS) terrestrial radio access network (E-UTRAN) system, a long term evolution (long term evolution, LTE) system, a new radio (new radio, NR) system, another mobile communication system, for example, a future mobile communication system, or the like. This is not limited in this embodiment of this application.

As shown in FIG. 5, the communication system 00 may include a network device 01 and one or more terminal devices 02 connected to the network device 01 (where FIG. 5 only shows one terminal device 02). DL data and UL data may be transmitted between the network device 01 and the terminal device 02.

The network device 01 is a device that can communicate with the terminal device 02. In some embodiments, the network device 01 may be an access network device. The access network device may also be referred to as a radio access network (radio access network, RAN) device, and is a device that provides a wireless communication function for the terminal device 02. For example, the access network device may be a base station. The base station may be a next generation NodeB (generation NodeB, gNB) in 5G, an evolved NodeB (evolved NodeB, eNB or eNodeB) in LTE, a radio network controller (radio network controller, RNC), a NodeB (NodeB, NB), a home controller (base station controller, BSC), a base station transceiver station (base station transceiver station, BTS), a home base station (for example, home NodeB or home evolved NodeB), a baseband unit (based unit, BBU), a transmitting and receiving point (transmitting and receiving point, TRP), a transmitting point (transmitting point, TP), a mobile switching center, or the like. The access network device may alternatively be a wireless controller, a central unit (centralized unit, CU), and/or a distributed unit (distributed unit, DU) in a scenario of a cloud radio access network (cloud radio access network, CRAN), or the network device may be a relay station, an access point, a vehicle-mounted device, a terminal device, a wearable device, a device in a future mobile network, or the like.

The terminal device 02 is a device having a wireless transceiver function. The terminal device 02 may be a mobile terminal device, or may be a non-mobile terminal device. For example, the terminal device 02 may be UE, a subscriber unit, a subscriber station, a mobile station, a remote station, a remote terminal, a mobile device, a terminal, an access terminal, a user terminal, a wireless communication device, a user agent, or a user apparatus. The access terminal may be a cellular phone, a cordless phone, a session initiation protocol (session initiation protocol, SIP) phone, a wireless local loop (wireless local loop, WLL), a personal digital assistant (personal digital assistant, PAD), a handheld device having a wireless communication function, a computer device or another processing device connected to a wireless modem, a vehicle-mounted device, a wearable device, a terminal device in a future evolved public land mobile network (public land mobile network, PLMN), or the like. This is not limited in this embodiment of this application.

The network device 01 and the terminal device 02 may perform data transmission by using a radio (radio) resource. The radio resource may include at least one of a time domain resource, a frequency domain resource, or a code domain resource. Specifically, when the network device 01 and the terminal device 02 perform data transmission, the network device 01 may transmit control information to the terminal device 02 through a control channel, for example, a physical downlink control channel (physical downlink control channel, PDCCH), to allocate a data channel, for example, a resource of a physical downlink shared channel (physical downlink shared channel, PDSCH) or a physical uplink shared channel (physical uplink shared channel, PUSCH) to the terminal device 02. For example, the control information may indicate a symbol and/or a resource block (resource block, RB) to which the data channel is mapped, and the network device 01 and the terminal device 02 perform data transmission on an allocated time-frequency resource through the data channel.

The network device 01 or terminal device 02 in FIG. 5 in this embodiment of this application may be implemented by one device or may be a functional module in one device. This is not specifically limited in this embodiment of this application. It may be understood that the foregoing function may be a network element in a hardware device, may be a software function running on dedicated hardware, may be a virtualized function instantiated on a platform, or may be a chip system. In this embodiment of this application, the chip system may include a chip, or may include a chip and another discrete component.

During specific implementation, the network device 01 or the terminal device 02 shown in FIG. 5 may include components shown in FIG. 6. FIG. 6 is a diagram of a hardware structure of a communication apparatus according to an embodiment of this application. As shown in FIG. 6, the communication apparatus 600 includes at least one processor 601, a communication line 602, and at least one communication interface 603. Further, the communication apparatus 600 may further include a memory 604. The processor 601, the memory 604, and the communication interface 603 may be connected through the communication line 602. In this embodiment of this application, at least one may be one, two, three, or more. This is not limited in this embodiment of this application.

The processor 601 may be a central processing unit (central processing unit, CPU), a general-purpose processor, a network processor (network processor, NP), a digital signal processor (digital signal processing, DSP), a microprocessor, a microcontroller, a programmable logic device (programmable logic device, PLD), or any combination thereof. The processor may alternatively be any other apparatus, for example, a circuit, a device, or a software module, having a processing function.

The communication link 602 may include a path, configured to transmit information between components included in the communication apparatus 600.

The communication interface 603 may be configured to communicate with another device or communication network (for example, an Ethernet, a radio access network (radio access network, RAN), a wireless local area network (wireless local area networks, WLAN)) The communication interface 603 may be a module, a circuit, a transceiver, or any apparatus capable of implementing communication.

The memory 604 may be a read-only memory (read-only memory, ROM), another type of static storage device that can store static information and/or instructions, a random access memory (random access memory, RAM), another type of dynamic storage device that can store information and/or instructions, an electrically erasable programmable read-only memory (electrically erasable programmable read-only memory, EEPROM), a compact disc read-only memory (compact disc read-only memory, CD-ROM), another compact disc storage, optical disc storage (including compressed optical discs, laser discs, optical discs, digital versatile optical discs, and Blu-ray discs), a magnetic disk storage medium, another magnetic storage device, or any another medium that can be used to carry or store expected program code in a form of an instruction or a data structure and that is accessible by a computer.

In a possible design, the memory 604 may exist independent of the processor 601, in other words, the memory 604 may be an external memory of the processor 601. In this case, the memory 604 may be connected to the processor 601 through the communication line 602, and configured to store instructions or program code. When the processor 601 calls and executes the instructions or the program code stored in the memory 604, a preamble repetition transmission method provided in the following embodiments of this application can be implemented. In another possible design, the memory 604 may alternatively be integrated with the processor 601, in other words, the memory 604 may be an internal memory of the processor 601. For example, the memory 604 is a cache, and may be configured to temporarily store some data and/or instruction information and the like.

In a possible implementation, the processor 601 may include one or more CPUs, such as a CPU 0 and a CPU 1 in FIG. 6. In another possible implementation, the communication apparatus 600 may include a plurality of processors, such as a processor 601 and a processor 607 in FIG. 6. In still another possible implementation, the communication apparatus 600 may further include an output device 605 and an input device 606. For example, the input device 606 may be a device such as a keyboard, a mouse, a microphone, or a joystick, and the output device 605 may be a device such as a display screen or a speaker (speaker).

It should be noted that the communication apparatus 600 may be a general-purpose device or a dedicated device. For example, the communication apparatus 600 may be a desktop computer, a portable computer, a network server, a mobile phone, a tablet computer, a wireless terminal, an embedded device, a chip system, or a device having a structure similar to that in FIG. 6. A type of the communication apparatus 600 is not limited in this embodiment of this application.

A preamble repetition transmission method according to an embodiment of this application is described with reference to the communication system 00 shown in FIG. 5. Each device mentioned in the following method embodiment may include the components shown in FIG. 6. Details are not described again.

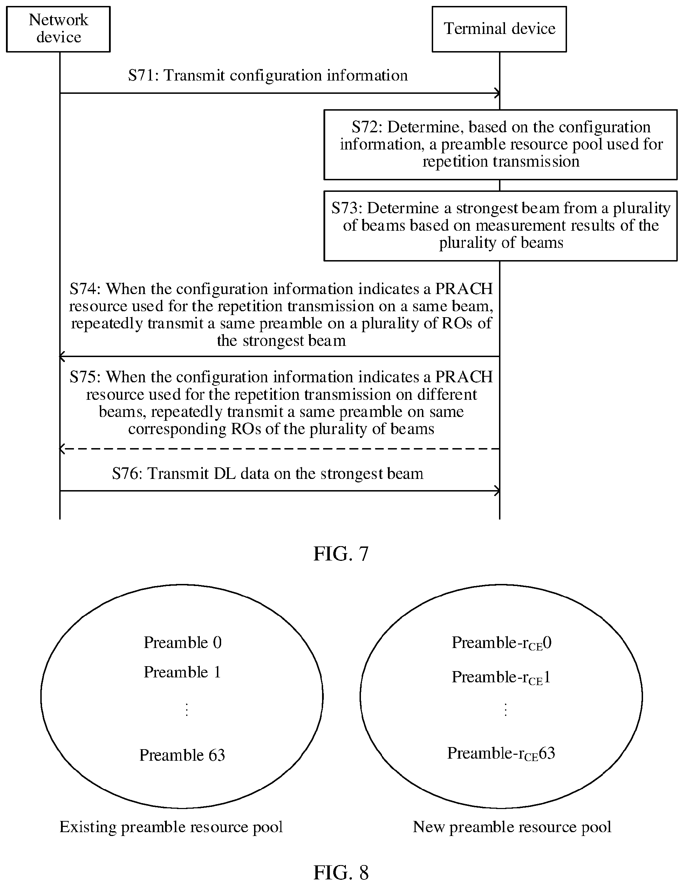

FIG. 7 is a flowchart of a preamble repetition transmission method according to an embodiment of this application. The method is applicable to a scenario in which a terminal device requests random access to a network device. As shown in FIG. 7, the method may include the following S71 to S76.

S71: The network device transmits configuration information. Correspondingly, the terminal device receives the configuration information from the network device. The configuration information may indicate PRACH resources used for repetition transmission on a same beam (same beams), or PRACH resources for repetition transmission on different beams (different beams).

In some embodiments, the configuration information may be included in broadcast signaling, or may be included in control signaling or other signaling, and may be set based on an actual use requirement. This is not limited in this embodiment of this application.

For example, the network device may transmit RRC signaling to the terminal device in a semi-static configuration manner. The RRC signaling carries the configuration information. Certainly, the network device may alternatively transmit the configuration information to the terminal device in another manner, for example, in a manner of transmitting a medium access control (medium access control, MAC) control element (control element, CE), a system message, physical layer signaling, downlink control information (downlink control information, DCI), or a paging message carrying the configuration information. This is not limited in this embodiment of this application.

The PRACH resources may include a code domain resource, a time domain resource, and a frequency domain resource. The code domain resource refers to a preamble repeatedly transmitted on the same beam, or a preamble repeatedly transmitted on the different beams. The time domain resource refers to time used for repeatedly transmitting the preamble, for example, a frame (frame), a subframe (subframe), a slot (slot), and a symbol (symbol). The frequency domain resource refers to a frequency domain position used for repeatedly transmitting the preamble. In this embodiment of this application, the time domain resource and the frequency domain resource that are used for repeatedly transmitting the preamble may be collectively referred to as ROs. That is, the RO may be understood as a transmission occasion of the preamble.

Manners for configuring the code domain resource, the time domain resource, and the frequency domain resource are respectively described below by using examples.

### (1) Code domain resource

In a first implementation, the network device may configure one new preamble resource pool (which may be referred to as a first resource pool), where the new preamble resource pool and an existing preamble resource pool (which may be referred to as a second resource pool) may be generated by using different configuration parameters.

The existing preamble resource pool/the conventional preamble resource pool is a preamble resource pool configured according to an existing protocol/a conventional protocol (for example, R16). Any one preamble in the existing preamble resource pool cannot be used for repetition transmission. To be specific, one preamble cannot be repeatedly transmitted on a same beam, or cannot be repeatedly transmitted on different beams. With reference to description content of the foregoing embodiments, according to stipulation of the existing protocol, the network device may configure the following three parameters: a parameter msgA-TotalNumberofRA-Preambles-r16, used for configuring a total quantity of existing preambles; a parameter zeroCorrelationZoneConfig, used for configuring a quantity N_{cs} of bits by which a root sequence of an existing preamble is shifted each time; and a parameter msgA-PRACH-RootSequenceIndex-r16, used for configuring a length L_{RA} of the root sequence of the existing preamble and a root index. After obtaining the foregoing three parameters, the terminal device may generate the existing preamble resource pool, that is, the second resource pool, based on the three parameters through table lookup.

The new preamble resource pool is a preamble resource pool configured in this embodiment of this application. The new preamble resource pool includes one or more new preambles, and each new preamble of the new preamble resource pool may be used for repetition transmission, to be specific, one new preamble can be repeatedly transmitted on a same beam, and/or repeatedly transmitted on different beams. It should be noted that, in this application, the foregoing three parameters stipulated by the existing protocol may be changed to configure a new set of parameters different from the foregoing three parameters, without changing a preamble generation method stipulated by the existing protocol (for example, without changing the foregoing Table 1 and Table 2 stipulated by the existing protocol). The new set of parameters includes: a parameter msgA-TotalNumberofRA-Preambles-r_{CE}, used for configuring a total quantity of new preambles; a parameter zeroCorrelationZoneConfig-r_{CE}, used for configuring a quantity N_{cs} of bits by which a root sequence of a new preamble is shifted each time; and a parameter msgA-PRACH-RootSequenceIndex-r_{CE}, used for configuring a length L_{RA} of the root sequence of the new preamble and a root index. After obtaining the foregoing three new parameters, the terminal device may generate, based on the three new parameters through table lookup, the new resource pool, that is, the first resource pool, different from the existing resource pool.

The foregoing parameter msgA-TotalNumberofRA-Preambles-r_{CE}, parameter zeroCorrelationZoneConfig-r_{CE}, and parameter msgA-PRACH-RootSequenceIndex-r_{CE} are merely described as examples, and do not constitute a limitation on this embodiment of this application. During actual implementation, a set of other new parameters may alternatively be used, to distinguish from the three parameters stipulated by the existing protocol. For example, the set of other new parameters includes: a parameter msgA-TotalNumberofRA-Preambles-r18, a parameter zeroCorrelationZoneConfig-r18, and a parameter msgA-PRACH-RootSequenceIndex-r18.

It should be noted that specific values of the three parameters stipulated in the existing protocol and the three new parameters configured in this embodiment of this application are not limited in this embodiment of this application, and values of parameters of a same category may be set to be the same or different according to actual needs. For example, values of the parameter msgA-TotalNumberofRA-Preambles-r16 and the parameter msgA-TotalNumberofRA-Preambles-r_{CE} may both be set to 64, in other words, a same total quantity of preambles are configured for the two. For another example, the parameter zeroCorrelationZoneConfig=6, and the parameter zeroCorrelationZoneConfig-r_{CE}=3, in other words, different quantities N_{cs} of bits by which root sequences are shifted each time are configured for the two.

For example, FIG. 8 is a diagram of an existing preamble resource pool and a new preamble resource pool. As shown in FIG. 8, the existing preamble resource pool and the new preamble resource pool may each include 64 preambles. Indexes (indexes) of existing preambles in the existing preamble resource pool may be sequentially: preamble 0, preamble 1, ..., and preamble 63, and indexes of new preambles in the new preamble resource pool may be sequentially: preamble-r_{CE} 0, preamble-r_{CE} 1, ..., and preamble-r_{CE} 63.

In a second implementation, the network device may reuse the existing preamble resource pool (which may be referred to as a second resource pool), and separately divide, from the existing preamble resource pool, one preamble resource sub-pool (which may be referred to as a first resource pool) used for repetition transmission.

The network device may configure the following parameters according to an existing protocol: a parameter msgA-TotalNumberofRA-Preambles-r16, used for configuring a total quantity of existing preambles; a parameter zeroCorrelationZoneConfig, used for configuring a quantity N_{cs} of bits by which a root sequence of an existing preamble is shifted each time; and a parameter msgA-PRACH-RootSequencelndex-r16, used for configuring a length L_{RA} of the root sequence of the existing preamble and a root index. In addition, a difference from the existing protocol lies in that the network device further specially configures the following new parameters: an index of a start preamble in the preamble resource sub-pool used for the repetition transmission, and a quantity of preambles in the preamble resource sub-pool used for the repetition transmission. In this way, the terminal device can generate the existing resource pool based on the parameters configured by the existing protocol, and then separately divide, from the existing resource pool based on the specially configured new parameters, the new resource pool specially used for the repetition transmission, so that an existing preamble resource is reused for the new resource pool.

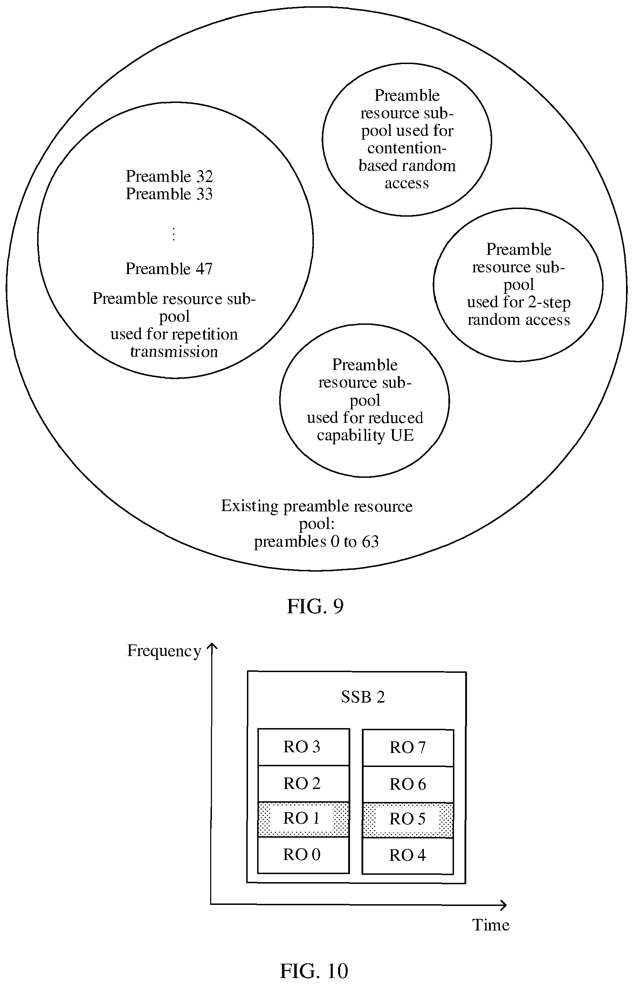

For example, FIG. 9 is a diagram of a reused resource pool. It is assumed that indexes of existing preambles in an existing preamble resource pool may be sequentially: preamble 0, preamble 1, ..., and preamble 63, an index of a start preamble in a preamble resource sub-pool used for repetition transmission is 32, and a quantity of preambles in the preamble resource sub-pool used for the repetition transmission is 16. In this case, as shown in FIG. 9, indexes of preambles in the preamble resource sub-pool used for the repetition transmission may be sequentially: preamble 32, preamble 33, ..., and preamble 47. In addition, one or more other resource pools, for example, three other resource sub-pools shown in FIG. 9, may be further divided from the existing preamble resource pool. The three other resource sub-pools are a preamble resource sub-pool used for contention-based random access (contention-based random access, CBRA), a preamble resource sub-pool used for 2-step random access (2-step RACH procedure), and a preamble resource sub-pool used for reduced capability UE (reduced capability UE).

### (2) Time domain resource

In the preamble repetition transmission method provided in embodiments of this application, a time domain resource of a PRACH may be configured according to an existing protocol (for example, R16). For example, when configuring a time domain RO of the PRACH, the network device may configure a parameter prach-ConfigurationIndex, and then UE may determine the time domain transmission occasion of the PRACH, that is, the time domain resource of the PRACH, based on the parameter prach-ConfigurationIndex through table lookup. This may refer to the specific descriptions of the foregoing embodiments. Details are not described herein again.

### (3) Frequency domain resource

In the preamble repetition transmission method provided in embodiments of this application, a frequency domain resource of a PRACH may be configured according to an existing protocol (for example, R16). For example, when configuring a frequency domain RO of the PRACH, the network device may configure a parameter msg-FrequencyStart and a parameter msg-FDM, and then UE may determine a start position of the frequency domain resource of the PRACH based on the parameter msg-FrequencyStart, and determine, based on the parameter msg-FDM, a quantity of RBs occupied in frequency domain. This may refer to the specific descriptions of the foregoing embodiments. Details are not described herein again.

In addition, the network device may further configure a parameter ssb-perRACH-OccasionAndCB-PreamblesPerSSB, where the parameter indicates a mapping relationship between an RO and an SSB. Further, when one SSB corresponds to a plurality of ROs, according to the existing protocol, ROs in one SSB are selected in ascending order according to a rule of first frequency domain and then time domain; or the network device may configure that ROs in one SSB are selected in ascending order according to a rule of first time domain and then frequency domain.

In some embodiments, in the configuration information, not only the code domain resource, the time domain resource, and the frequency domain resource are configured, but also a quantity N of preamble repetition transmissions on a same beam or a quantity K of beams used for repeatedly transmitting a preamble may be configured. In this way, the terminal device can transmit the PRACH a plurality of times on a same beam, or transmit the PRACH a plurality of times on different beams. This may refer to the specific descriptions of the following Embodiment 1 and Embodiment 2. Details are not described herein again.

S72: The terminal device determines, based on the configuration information, a preamble resource pool used for the repetition transmission. The preamble resource pool includes one or more preambles, and each preamble is a ZC sequence with a length L_{RA}.

L_{RA} =839, L_{RA} =139 , or L_{RA} is another length. This is not limited in this embodiment of this application.

In addition, any preamble in the preamble resource pool may be a long preamble or a short preamble. The long preamble is classified into: a format 0, a format 1, a format 2, and a format 3. The short preamble is classified into nine types: A1, A2, A3, B1, B2, B3, B4, C0, and C2. In time domain, one preamble includes: one cyclic prefix, one preamble sequence, and one empty guard period. This may refer to an existing preamble setting manner. Details are not described herein again.

If the configuration information of the network device includes: the parameter msgA-TotalNumberofRA-Preambles-r_{CE}, the parameter zeroCorrelationZoneConfig-r_{CE}, and the parameter msgA-PRACH-RootSequenceIndex-r_{CE}, the terminal device generates the new preamble resource pool, that is, the first resource pool, different from the existing preamble resource pool.

If the configuration information of the network device includes: the parameter msgA-TotalNumberofRA-Preambles-r16, the parameter zeroCorrelationZoneConfig, the parameter msgA-PRACH-RootSequencelndex-r16, the index of the start preamble in the preamble resource sub-pool used for the repetition transmission, and the quantity of preambles in the preamble resource sub-pool used for the repetition transmission, the terminal device may separately divide, from the existing preamble resource pool, the one preamble resource sub-pool, that is, the first resource pool, used for the repetition transmission.

S73: The terminal device determines one beam from a plurality of beams based on measurement results of the plurality of beams transmitted by the network device.

Signal strength of the one beam determined from the plurality of beams is greater than signal strength of another beam in the plurality of beams, that is, a first beam is a beam with the strongest signal strength in the plurality of beams. For ease of descriptions, in the following embodiments, the one beam determined from the plurality of beams is referred to as the strongest beam.

For example, the beam shown in FIG. 4 is still used as an example for illustration. As shown in (a) in FIG. 4, a base station may sequentially transmit, in different spatial directions in chronological order, four beams having directivity, that is, an SSB 1, an SSB 2, an SSB 3, and an SSB 4, and the UE measures signal strength of the four SSBs, to obtain measurement results: SSB 1: -120 dBm, SSB 2: -80 dBm, SSB 3: -100 dBm, and SSB 4: -100 dBm In this way, the UE can determine the SSB 2 as the strongest beam.

S74: When the configuration information indicates the PRACH resources used for the repetition transmission on the same beam, the terminal device repeatedly transmits the same preamble on a plurality of ROs of the strongest beam.

The "repeatedly transmits a same preamble on a plurality of ROs of the strongest beam" means that one preamble is transmitted on each of the plurality of ROs of the strongest beam, and preambles transmitted on the ROs are the same. The preamble is any preamble randomly selected by the terminal device from the preamble resource pool used for the repetition transmission.

For example, it is assumed that the strongest beam is the SSB 2 beam shown in FIG. 4. With reference to FIG. 4, as shown in FIG. 10, it is assumed that the SSB 2 includes eight ROs: an RO 0, an RO 1, an RO 2, an RO 3, an RO 4, an RO 5, an RO 6, and an RO 7. The UE may randomly select one group of ROs, such as the RO 1 and the RO 5, from the eight ROs, and randomly select one preamble, for example, a preamble 32, from the preamble resource pool used for the repetition transmission. Then, the UE may separately transmit the preamble 32 on the RO 0 and the RO 5. After receiving two PRACH signals including the preamble 32, the base station combines the two PRACH signals to generate a gain, thereby achieving coverage enhancement. Then, the base station infers that the SSB 2 is a best downlink beam of the UE based on a mapping relationship, and transmits DL data to the UE on the SSB 2.

S75: When the configuration information indicates the PRACH resources used for the repetition transmission on the different beams, the terminal device repeatedly transmits the same preamble on same corresponding ROs of K beams, where K is an integer greater than or equal to 2.

The K beams include the strongest beam and (K-1) beams adjacent to the strongest beam in the plurality of beams. Correspondingly, the "repeatedly transmits a same preamble on same corresponding ROs of K beams" means that one preamble is transmitted on ROs that have a same number and that are of the K beams, and preambles transmitted on the ROs are the same. The preamble is any preamble randomly selected by the terminal device from the preamble resource pool used for the repetition transmission.

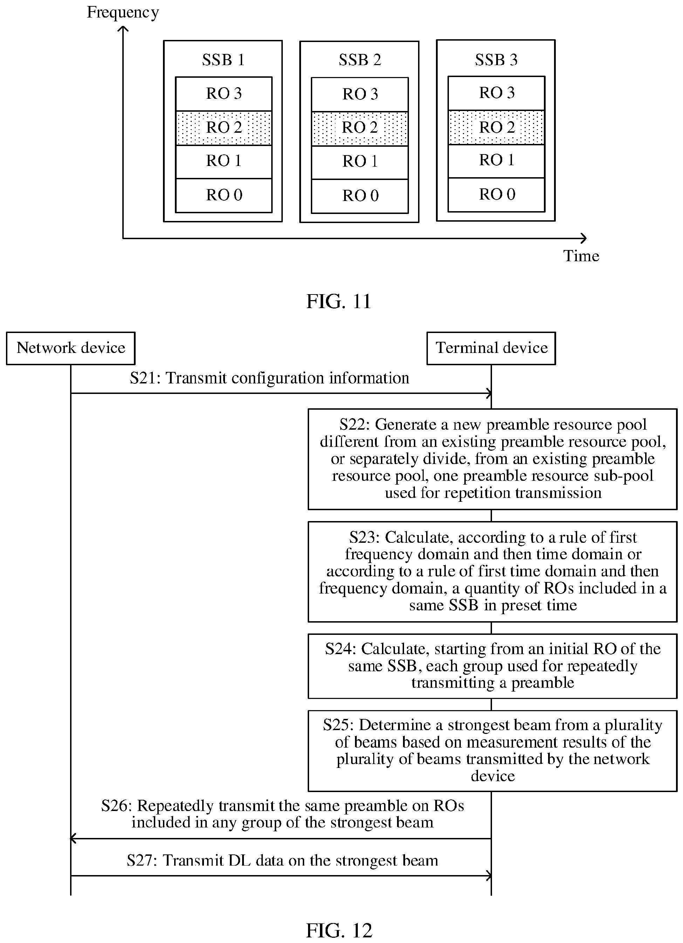

For example, it is assumed that the strongest beam is a beam corresponding to the SSB 2 shown in FIG. 4, one beam before the SSB 2 is the SSB 1, and one beam after the SSB 2 is the SSB 3. That is, the SSB 1, the SSB 2, and the SSB 3 are three adjacent beams. With reference to FIG. 4, as shown in FIG. 11, each of the SSB 1, the SSB 2, and the SSB 3 includes four ROs: an RO 0, an RO 1, an RO 2, and an RO 3. That is, numbers of ROs in the SSB 1, the SSB 2, and the SSB 3 are the same. The UE may select the RO 2 from the four ROs, and randomly select one preamble, for example, a preamble 32, from the preamble resource pool used for the repetition transmission. Then, the UE may transmit the preamble 32 on the RO 2 of the SSB 1, transmit the preamble 32 on the RO 2 of the SSB 2, and transmit the preamble 32 on the RO 2 of the SSB 3. After receiving three PRACH signals including the preamble 32, the base station combines the PRACH signals to generate a gain, thereby achieving coverage enhancement. Then, the base station infers that the SSB 2 is a best downlink beam of the UE based on a mapping relationship, and transmits DL data to the UE on the SSB 2.

S76: The network device transmits DL data to the terminal device on the strongest beam.

In the preamble repetition transmission method provided in embodiments of this application, because the network device configures, for the terminal device, the PRACH resources, such as the code domain resource, the time domain resource, and the frequency domain resource, used for the repetition transmission, the terminal device may generate, based on a configuration parameter, the preamble used for the repetition transmission, and determine an RO used for transmitting the preamble. Then, the terminal device repeatedly transmits a PRACH a plurality of times on a same beam, or repeatedly transmits a PRACH a plurality of times on different beams. Regardless of whether the PRACH is repeatedly transmitted the plurality of times on the same beam or is repeatedly transmitted the plurality of times on the different beams, each PRACH carries the same preamble, so that a plurality of PRACHs are combined to generate a gain. Therefore, coverage enhancement for the PRACH is achieved, and reliability of a communication link and a success rate of random access are further improved.

The foregoing embodiment mentions that the PRACH is repeatedly transmitted the plurality of times on the same beam and the PRACH is repeatedly transmitted the plurality of times on the different beams. The two manners are respectively described in detail below by using Embodiment 1 and Embodiment 2.

### Embodiment 1

FIG. 12 is a flowchart of repeatedly transmitting a PRACH a plurality of times on a same beam according to an embodiment of this application. As shown in FIG. 12, the method may include the following S21 to S27.

S21: A network device transmits configuration information. Correspondingly, a terminal device receives the configuration information from the network device. The configuration information may indicate PRACH resources used for repetition transmission on a same beam.

With reference to the descriptions of the foregoing embodiments, the network device may use the following two configuration manners.

In a first configuration manner, the configuration information may include the following parameters:
a parameter msgA-TotalNumberofRA-Preambles-r_{CE}, used for configuring a total quantity of new preambles;
a parameter zeroCorrelationZoneConfig-r_{CE}, used for configuring a quantity N_{cs} of bits by which a root sequence of a new preamble is shifted each time;
a parameter msgA-PRACH-RootSequenceIndex-r_{CE}, used for configuring a length L_{RA} of the root sequence of the new preamble and a root index.
a parameter prach-ConfigurationIndex, used for configuring a time domain resource of a preamble used for single-beam repetition transmission;
a parameter msg-FrequencyStart and a parameter msg-FDM, where the parameter msg-FrequencyStart is used for determining a start position of a frequency domain resource of the PRACH, and the parameter msg-FDM is used for determining a quantity of RBs occupied in frequency domain; and
a parameter ssb-perRACH-OccasionAndCB-PreamblesPerSSB, used for configuring a mapping relationship between an RO and an SSB.

In a second configuration manner, the configuration information may include the following parameters:
a parameter msgA-TotalNumberofRA-Preambles-r16, used for configuring a total quantity of existing preambles;
a parameter zeroCorrelationZoneConfig, used for configuring a quantity N_{cs} of bits by which a root sequence of an existing preamble is shifted each time;
a parameter msgA-PRACH-RootSequencelndex-r16, used for configuring a length L_{RA} of the root sequence of the existing preamble and a root index;
an index of a start preamble in a preamble resource sub-pool used for single-beam repetition transmission, where the resource sub-pool belongs to a part of an existing preamble resource pool, in other words, the resource sub-pool is included in the existing preamble resource pool;
a quantity of preambles in the preamble resource sub-pool used for the single-beam repetition transmission, where the resource sub-pool belongs to the part of the existing preamble resource pool, in other words, the resource sub-pool is included in the existing preamble resource pool;
a parameter prach-ConfigurationIndex, used for configuring a time domain resource of a preamble used for the single-beam repetition transmission;
a parameter msg-FrequencyStart and a parameter msg-FDM, where the parameter msg-FrequencyStart is used for determining a start position of a frequency domain resource of the PRACH, and the parameter msg-FDM is used for determining a quantity of RBs occupied in frequency domain; and
a parameter ssb-perRACH-OccasionAndCB-PreamblesPerSSB, used for configuring a mapping relationship between an RO and an SSB.

Regardless of whether the first configuration manner or the second configuration manner is used, the terminal device cannot determine which ROs of the strongest beam a same preamble is repeatedly transmitted on. In a first possible implementation, the terminal device may randomly select a plurality of ROs to repeatedly transmit the preamble. In a second possible implementation, the network device may configure, for the terminal device, a plurality of ROs used for repeatedly transmitting the preamble.

For example, for the second possible implementation, to determine the ROs used for repeatedly transmitting the same preamble, the configuration information may further include the following parameters ① and ②.
① A parameter msg1-repetition-number (which may be referred to as a first parameter) is used for configuring a quantity N of preamble repetition transmissions on a same beam, that is, a quantity of ROs included in one group of ROs used for repeatedly transmitting the same preamble on one beam. N is an integer greater than or equal to 2.

It is assumed that a quantity of ROs included in one SSB is M. In this case, N = 2, ..., M.

In an optional implementation, N and M may further satisfy the following condition: $N = \left⌊\frac{M}{j}\right⌋ ,$ where
└ ┘ is a round-down symbol, j indicates a quantity of groups included in the same beam, and j is a positive integer.

In a specific example, when j = 1, N = M. To be specific, all ROs included in the same beam belong to a same group, and the ROs are all used for repeatedly transmitting the same preamble.

In some embodiments, any RO of one SSB belongs to a specific group, in other words, any RO of one SSB may be used as an RO used for repeatedly transmitting a preamble.

For example, it is assumed that an SSB 1 includes eight ROs. In this case, the network device may configure N to 2, 4, or 8. When N = 2, the SSB 1 includes four groups, and each group includes two ROs used for repeatedly transmitting the same preamble. When N = 4, the SSB 1 includes two groups, and each group includes four ROs used for repeatedly transmitting the same preamble. When N = 8, the SSB 1 includes one group, and each group includes eight ROs used for repeatedly transmitting the same preamble.

For another example, it is assumed that an SSB 1 includes 30 ROs. In this case, the network device may configure N to 2, 3, 5, 6, 10, 15, or 30. When N = 2, the SSB 1 includes 15 groups, and each group includes two ROs used for repeatedly transmitting the same preamble. When N = 3, the SSB 1 includes 10 groups, and each group includes three ROs used for repeatedly transmitting the same preamble. When N = 5 , the SSB 1 includes six groups, and each group includes five ROs used for repeatedly transmitting the same preamble. When N = 6, the SSB 1 includes five groups, and each group includes six ROs used for repeatedly transmitting the same preamble. When N =10 , the SSB 1 includes three groups, and each group includes 10 ROs used for repeatedly transmitting the same preamble. When N =15 , the SSB 1 includes two groups, and each group includes 15 ROs used for repeatedly transmitting the same preamble. When N = 30 , the SSB 1 includes one group, and each group includes 30 ROs used for repeatedly transmitting the same preamble.

In some other embodiments, one or more ROs of one SSB do not belong to any group. To be specific, a part of ROs of one SSB may be used as ROs used for repeatedly transmitting a preamble, and the other part of ROs may not be used as ROs used for repeatedly transmitting the preamble.

For example, it is assumed that an SSB 1 includes nine ROs. In this case, the network device may configure N to 2 or 4. When N = 2, the SSB 1 includes four groups, each group includes two ROs used for repeatedly transmitting the same preamble, and one RO is left. When N = 4, the SSB 1 includes two groups, each group includes four ROs used for repeatedly transmitting the same preamble, and one RO is left.

It should be understood that a larger value of the quantity N of repetition transmissions on the same beam indicates a larger quantity of ROs included in each group, a larger gain generated through combination, and a better coverage enhancement effect.

② A parameter ro-repetition-interval (which may be referred to as a second parameter) indicates an RO interval at which the preamble is repeatedly transmitted on the same beam, and may be recorded as k, that is, indicates an interval between any two adjacent ROs in any group of ROs used for repeatedly transmitting the same preamble on one beam. k = 1, ..., M , and M is the quantity of ROs included in one SSB.

For example, it is assumed that the SSB 1 includes six ROs: an RO 0, an RO 1, an RO 2, an RO 3, an RO 4, and an RO 5, and N=3. In this case, k=1 or 2. When k = 1, the RO 0, the RO 1, and the RO 2 are one group, and the RO 3, the RO 4, and the RO5 are another group. When k = 2, the RO 0, the RO 2, and the RO 4 are one group, and the RO 1, the RO 3, and the RO 5 are another group.

In addition to the foregoing parameters ① and ②, the configuration information transmitted by the network device may further include the following parameter ③.

③ A parameter msgl-repetion-enable (which may be referred to as a third parameter) indicates whether to enable the repetition transmission of the same preamble on the same beam.

In an optional implementation, the parameter msgl-repetion-enable may be enumerated.

For example, if the parameter msgl-repetion-enable is in the following form:
msgl-repetion-enable ENUMERATED {enabled},
the parameter indicates to enable (enable) the repetition transmission of the same preamble on the same beam.

For another example, if the parameter msgl-repetion-enable is in the following form:
msgl-repetion-enable ENUMERATED {disenabled},
the parameter indicates to disenable (disenable) the repetition transmission of the same preamble on the same beam.

For another example, the network device may not configure the parameter msg1-repetion-enable, in other words, the parameter msgl-repetion-enable is not carried in the configuration information. In this case, the repetition transmission of the same preamble on the same beam is disenabled by default.

In an optional implementation, the parameter msgl-repetion-enable may be numeric.

For example, when msg1-repetion-enable=0, it indicates to enable the repetition transmission of the same preamble on the same beam, and when msg1-repetion-enable=1, it indicates to disenable the repetition transmission of the same preamble on the same beam.

For another example, when msg1-repetion-enable=1, it indicates to enable the repetition transmission of the same preamble on the same beam, and when msg1-repetion-enable=0, it indicates to disenable the repetition transmission of the same preamble on the same beam.

It should be understood that the parameter msgl-repetion-enable is equivalent to an enable switch. The parameter is set, so that the terminal device can be triggered to perform a procedure of single-beam repetition transmission.

S22: If the configuration information of the network device includes: the parameter msgA-TotalNumberofRA-Preambles-r_{CE}, the parameter zeroCorrelationZoneConfig-r_{CE}, and the parameter msgA-PRACH-RootSequenceIndex-r_{CE}, the terminal device generates one new preamble resource pool different from the existing preamble resource pool.

Alternatively, if the configuration information of the network device includes: the parameter msgA-TotalNumberofRA-Preambles-r16, the parameter zeroCorrelationZoneConfig, the parameter msgA-PRACH-RootSequenceIndex-r16, the index of the start preamble used for the single-beam repetition transmission, and the quantity of preambles in the preamble resource sub-pool used for the single-beam repetition transmission, the terminal device separately divides, from the existing preamble resource pool, one preamble resource sub-pool used for the repetition transmission.

For a specific implementation of S22, refer to the descriptions of the foregoing S71 and S72. Details are not described herein again.

S23: The terminal device calculates, based on the parameter ssb-perRACH-OccasionAndCB-PreamblesPerSSB, the parameter msg-FDM, and the parameter prach-ConfigurationIndex according to a rule of first frequency domain and then time domain (which is stipulated by an existing protocol) or according to a rule of first time domain and then frequency domain (which is configured by the network device), a total quantity of ROs included in a same SSB in preset time. The total quantity of ROs included in the same SSB in the preset time may be denoted as M.

Because the parameter msg-FDM and the parameter prach-ConfigurationIndex are used for configuring time-frequency domain of an RO, and the parameter ssb-perRACH-OccasionAndCB-PreamblesPerSSB is used for configuring a mapping relationship between the RO and an SSB, the terminal device may calculate, based on the parameters, the quantity of ROs included in the same SSB.

The "preset time" may also be referred to as a preset period, preset duration, or a preset time period, and is a period of time stipulated by a protocol or a period of time configured for the network device. In some embodiments, the "preset time" may be one mapping period (association period). In one mapping period, each of all SSBs is mapped to an RO. In some other embodiments, the "preset time" may be one mapping pattern period (association pattern period). In one mapping pattern period, each of all SSBs is mapped to an RO. For example, one mapping pattern period may be 160 ms.

It should be understood that the mapping period and the mapping pattern period are both exemplary descriptions. During actual implementation, other time may alternatively be defined or configured as the "preset time", and duration of the "preset time" may be set according to an actual use requirement. This is not limited in this embodiment of this application.

S24: The terminal device calculates, starting from an initial RO (which may be recorded as s) of the same SSB, a quantity (which may be recorded as N) of ROs included in each group of groups used for single-beam repetition transmission of the preamble, that is, calculates a quantity of preamble repetition transmissions in each group of a single beam as N.

The ROs in the same SSB are mapped in ascending order according to the rule of first frequency domain and then time domain or according to the rule of first time domain and then frequency domain. The rule of first frequency domain and then time domain is stipulated by a protocol, and the rule of first time domain and then frequency domain is configured by the network device. The initial RO is a 1^{st} RO mapped in the same SSB. Usually, an index or a number of the initial RO is RO 0 or RO 1. If the initial RO is an RO 0, s=0; or if the initial RO is an RO 1, s=1.

Usually, the protocol stipulates that ROs included in a same beam in preset time are sorted by default according to the rule of first frequency domain and then time domain, and the network device does not need to specially configure the sorting rule. If the ROs included in the same beam in the preset time need to be sorted according to the rule of first time domain and then frequency domain, the network device may set the sorting rule in the configuration information.

Specifically, when the configuration information further includes a preset rule, the ROs included in the same beam in the preset time are sorted according to the rule of first time domain and then frequency domain; or when the configuration information does not include the preset rule, the ROs included in the same beam in the preset time are sorted according to the rule of first frequency domain and then time domain.

In some embodiments, ROs of one group may be represented as: {(s + nk) mod M}, where s represents a 1^{st} RO mapped in the one group, n = (0, 1..., N-1), N represents a quantity of preamble repetition transmissions on the same beam (that is, a quantity of ROs included in the one group), k represents the RO interval at which the preamble is repeatedly transmitted on the same beam, mod is a mathematical operation symbol-a modulo operator, and M represents the total quantity of ROs included in the same SSB. After an i^{th} group is obtained through grouping by using the foregoing formula, an (i+1)^{th} group is obtained through further grouping by using a formula s++, and so on, and the grouping is stopped until s>M.

Example 1: It is assumed that s = 0, M = 8, k = 4, and N = 2. In this case, these values are substituted into the foregoing formula, to obtain:
a group 1 $\left\{\left(s+nk\right)mod M\right\} = \left\{\left(0+\left(0, 1\right)\times 4\right)mod 8\right\} = \left\{0, 4\right\} ;$
a group 2 $\left\{\left(s+nk\right)mod M\right\} = \left\{\left(1+\left(0, 1\right)\times 4\right)mod 8\right\} = \left\{1, 5\right\} ;$
a group 3 $\left\{\left(s+nk\right)mod M\right\} = \left\{\left(2+\left(0, 1\right)\times 4\right)mod 8\right\} = \left\{2, 6\right\} ;$ and
a group 4 $\left\{\left(s+nk\right)mod M\right\} = \left\{\left(3+\left(0, 1\right)\times 4\right)mod 8\right\} = \left\{3, 7\right\} ;$

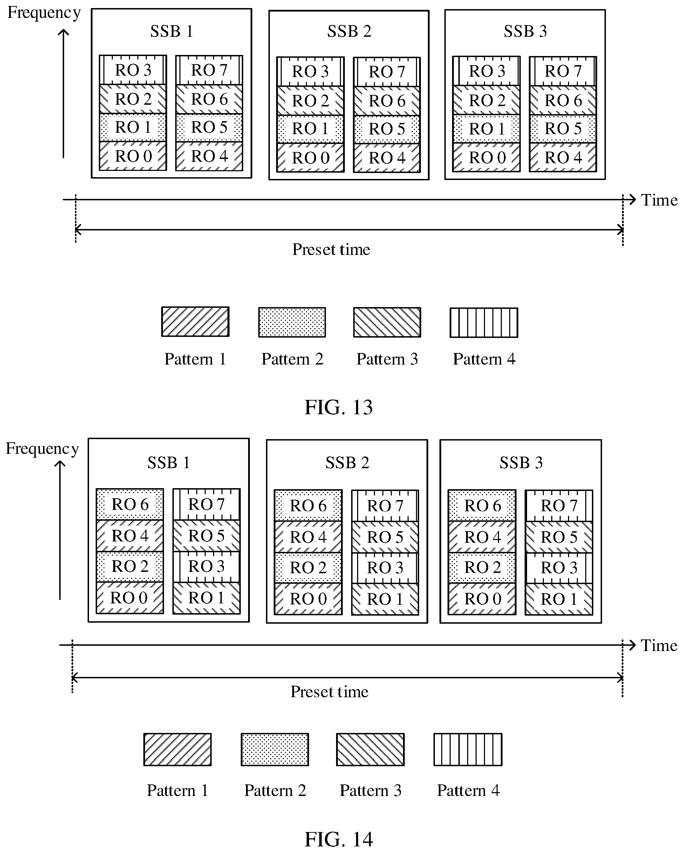

An example in which the ROs in the same SSB are sorted according to the rule of first frequency domain and then time domain is used for descriptions. As shown in FIG. 13, three SSBs are included in the preset time. The three SSBs are an SSB 1, an SSB 2, and an SSB 3, and numbers of ROs in each of the three SSBs are RO 0 to RO 7. For any SSB in the preset time, an RO 0 and an RO 4 are both filled with a pattern 1, indicating that the RO 0 and the RO 4 belong to the group 1; an RO 1 and an RO 5 are both filled with a pattern 2, indicating that the RO 1 and the RO 5 belong to the group 2; an RO 2 and an RO 6 are both filled with a pattern 3, indicating that the RO 2 and the RO 6 belong to the group 3; and an RO 3 and an RO 7 are both filled with a pattern 4, indicating that the RO 3 and the RO 7 belong to the group 4.

An example in which the ROs in the same SSB are sorted according to the rule of first time domain and then frequency domain is used for descriptions. As shown in FIG. 14, three SSBs are included in the preset time. The three SSBs are an SSB 1, an SSB 2, and an SSB 3, and numbers of ROs in each of the three SSBs are RO 0 to RO 7. For any SSB in the preset time, an RO 0 and an RO 4 are both filled with a pattern 1, indicating that the RO 0 and the RO 4 belong to the group 1; an RO 1 and an RO 5 are both filled with a pattern 3, indicating that the RO 1 and the RO 5 belong to the group 2; an RO 2 and an RO 6 are both filled with a pattern 2, indicating that the RO 2 and the RO 6 belong to the group 3; and an RO 3 and an RO 7 are both filled with a pattern 4, indicating that the RO 3 and the RO 7 belong to the group 4.

Example 2: It is assumed that s = 0, M = 8, k = 1, and N = 2. In this case, these values are substituted into the foregoing formula, to obtain:
a group 1 $\left\{\left(s+nk\right)mod M\right\} = \left\{\left(0+\left(0, 1\right)\times 1\right)mod 8\right\} = \left\{0, 1\right\} ;$
a group 2 $\left\{\left(s+nk\right)mod M\right\} = \left\{\left(2+\left(0, 1\right)\times 1\right)mod 8\right\} = \left\{2, 3\right\} ;$
a group 3 $\left\{\left(s+nk\right)mod M\right\} = \left\{\left(4+\left(0, 1\right)\times 1\right)mod 8\right\} = \left\{4, 5\right\} ;$ and
a group 4 $\left\{\left(s+nk\right)mod M\right\} = \left\{\left(6+\left(0, 1\right)\times 1\right)mod 8\right\} = \left\{6, 7\right\} .$

It should be noted that, because any two groups cannot include the same RO, in the foregoing calculation process, s = 0, s = 2, s =4, and s = 6, and s = 1, s = 3, and s = 5 are discarded.

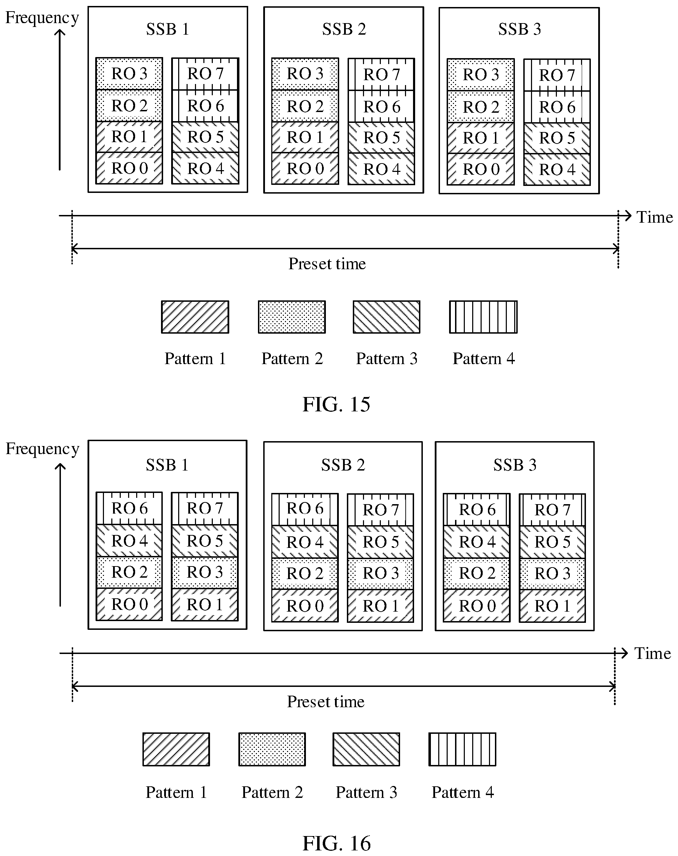

An example in which the ROs in the same SSB are sorted according to the rule of first frequency domain and then time domain is used for descriptions. As shown in FIG. 15, three SSBs are included in the preset time. The three SSBs are an SSB 1, an SSB 2, and an SSB 3, and numbers of ROs in each of the three SSBs are RO 0 to RO 7. For any SSB in the preset time, an RO 0 and an RO 1 are both filled with a pattern 1, indicating that the RO 0 and the RO 1 belong to the group 1; an RO 2 and an RO 3 are both filled with a pattern 2, indicating that the RO 2 and the RO 3 belong to the group 2; an RO 4 and an RO 5 are both filled with a pattern 3, indicating that the RO 4 and the RO 5 belong to the group 3; and an RO 6 and an RO 7 are both filled with a pattern 4, indicating that the RO 6 and the RO 7 belong to the group 4.

An example in which the ROs in the same SSB are sorted according to the rule of first time domain and then frequency domain is used for descriptions. As shown in FIG. 16, three SSBs are included in the preset time. The three SSBs are an SSB 1, an SSB 2, and an SSB 3, and numbers of ROs in each of the three SSBs are RO 0 to RO 7. For any SSB in the preset time, an RO 0 and an RO 1 are both filled with a pattern 1, indicating that the RO 0 and the RO 1 belong to the group 1; an RO 2 and an RO 3 are both filled with a pattern 2, indicating that the RO 2 and the RO 3 belong to the group 2; an RO 4 and an RO 5 are both filled with a pattern 3, indicating that the RO 4 and the RO 5 belong to the group 3; and an RO 6 and an RO 7 are both filled with a pattern 4, indicating that the RO 6 and the RO 7 belong to the group 4.

With reference to the descriptions of FIG. 13 to FIG. 16 in the foregoing embodiments, the following conclusion may be summarized:
1. The ROs in the same SSB may be sorted according to the rule of first frequency domain and then time domain (as shown in FIG. 13 or FIG. 15), or may be sorted according to the rule of first time domain and then frequency domain (as shown in FIG. 14 or FIG. 16). The rule of first frequency domain and then time domain is stipulated (that is, default) by the protocol, and the rule of first time domain and then frequency domain is configured by the network device.
2. Time domain resources of ROs in a same group are the same, in other words, the PRACH may be repeatedly transmitted on different frequency domain resources at a same time. Alternatively, frequency domain resources of ROs in a same group are the same, in other words, the PRACH may be repeatedly transmitted on the same frequency domain at different times.

In a case in which the time domain resources of the ROs in the same group are the same, and the frequency domain resources of the ROs in the same group are different, as shown in FIG. 14, if the terminal device selects a group 1 of the SSB 1, an RO 0 and an RO 4 occupy different frequency domain resources at a same time, and the terminal device may simultaneously transmit the same preamble on the RO 0 and the RO 4 of the SSB 1; and further, as shown in FIG. 15, if the terminal device selects a group 1 of the SSB1, an RO 0 and an RO 1 occupy different frequency domain resources at a same time, and the terminal device may transmit the same preamble on the RO 0 and the RO 1 of the SSB 1.

In a case in which the frequency domain resources of the ROs in the same group are the same, and the time domain resources of the ROs in the same group are different, as shown in FIG. 13, if the terminal device selects a group 1 of the SSB 1, an RO 0 and an RO 4 occupy different frequency domain resources at different times, and the terminal device may transmit the same preamble on the RO 0 and the RO 4 of the SSB 1 in a time division manner; and further, as shown in FIG. 16, if the terminal device selects a group 1 of the SSB 1, an RO 0 and an RO 1 occupy a same frequency domain resource at different times, and the terminal device may transmit the same preamble on the RO 0 and the RO 1 of the SSB 1 in a time division manner.

The foregoing embodiment provides two cases. In one case, the time domain resources of the ROs in the same group are the same, and the frequency domain resources of the ROs in the same group are different. In another case, the frequency domain resources of the ROs in the same group are the same, and the time domain resources of the ROs in the same group are different. Still another case is further provided in this embodiment of this application: ROs that are in the same group and that have different time domain resources and different frequency domain resources exist.

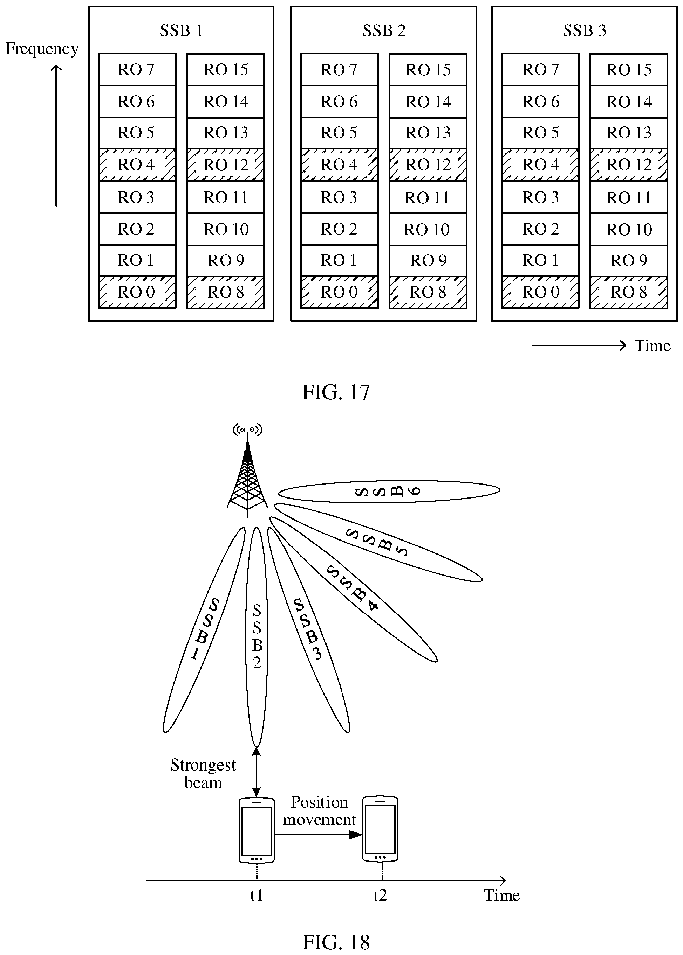

For example, as shown in FIG. 17, a base station sequentially broadcasts an SSB 1, an SSB 2, and an SSB 3 to UE. The UE determines the SSB 3 as a strongest beam, and selects to repeatedly transmit the same preamble on an RO 0, an RO 4, an RO 8, and an RO 12 of the SSB 3. In the group of ROs, ROs that have a same time domain resource and different frequency domain resources include: the ROs 0 and 4 and the ROs 8 and 12; ROs that have different time domain resources and a same frequency domain resource include: the ROs 0 and 8 and the ROs 4 and 12; and ROs that have different time domain resources and different frequency domain resources include: the ROs 0 and 12 and the ROs 4 and 8.

S25: The terminal device determines a strongest beam from a plurality of beams based on measurement results of the plurality of beams transmitted by the network device.

S26: The terminal device repeatedly transmits the same preamble on ROs included in any group of the strongest beam. The any group is one group randomly selected by the terminal device from a plurality of groups. The preamble is one preamble randomly selected by the terminal device from the preamble resource pool used for the repetition transmission.

S27: The network device transmits DL data to the terminal device on the strongest beam.

For a specific implementation of S25 to S27, refer to the descriptions of the foregoing S73, S74, and S76. Details are not described herein again.

In a resource configuration method for single-beam repetition transmission provided in this embodiment of this application, two manners of configuring the preamble resource pool used for the repetition transmission are provided. In one manner, one new preamble resource pool is generated by using the parameter msgA-TotalNumberofRA-Preambles-r_{CE}, the parameter zeroCorrelationZoneConfig-r_{CE}, and the parameter msgA-PRACH-RootSequenceIndex-r_{CE}. In another manner, one resource sub-pool is separately divided from the existing preamble resource pool by using the index of the start preamble in the preamble resource sub-pool used for the repetition transmission, and the quantity of preambles in the preamble resource sub-pool used for the repetition transmission. In addition, in this embodiment of this application, the parameter msgl-repetion-enable, namely, the quantity N of repetition transmissions on the same beam, and an interval ro-repetition-interval of the repetition transmissions on the same beam are newly added, to configure, for the terminal device, a code domain resource, a time domain resource, and a frequency domain resource used for the repetition transmission. In this way, the terminal device can generate, based on a configuration parameter, the preamble used for the repetition transmission, and determine an RO used for transmitting the preamble. Then, the terminal device repeatedly transmits the PRACH the plurality of times on the same beam, and each PRACH carries the same preamble, so that a plurality of PRACHs are combined to generate a gain. Therefore, coverage enhancement for the PRACH is achieved, and a success rate of random access is further improved.

### Embodiment 2

The foregoing Embodiment 1 is described by using an example in which the terminal device selects the strongest beam to transmit the PRACH. In an NR system, a network device transmits a large quantity of beams, and sometimes, the quantity is as many as 64. In addition, because a beam has directivity, each beam may be quite thin. In this way, when a terminal device moves quickly, there may be the following problem. As shown in FIG. 18, at a moment t1, the terminal device detects that an SSB 2 broadcast by the network device is a strongest beam in all beams. In a short time period from the moment t1 to a moment t2, a position of the terminal device changes. Because the beam has directivity, after the position of the terminal device changes, the SSB 2 may not be the strongest beam for the terminal device. If the terminal device still transmits a PRACH on the SSB 2, random access may fail due to a weak signal. To resolve a similar problem, an embodiment of this application further provides a method for repeatedly transmitting a PRACH a plurality of times on different beams.

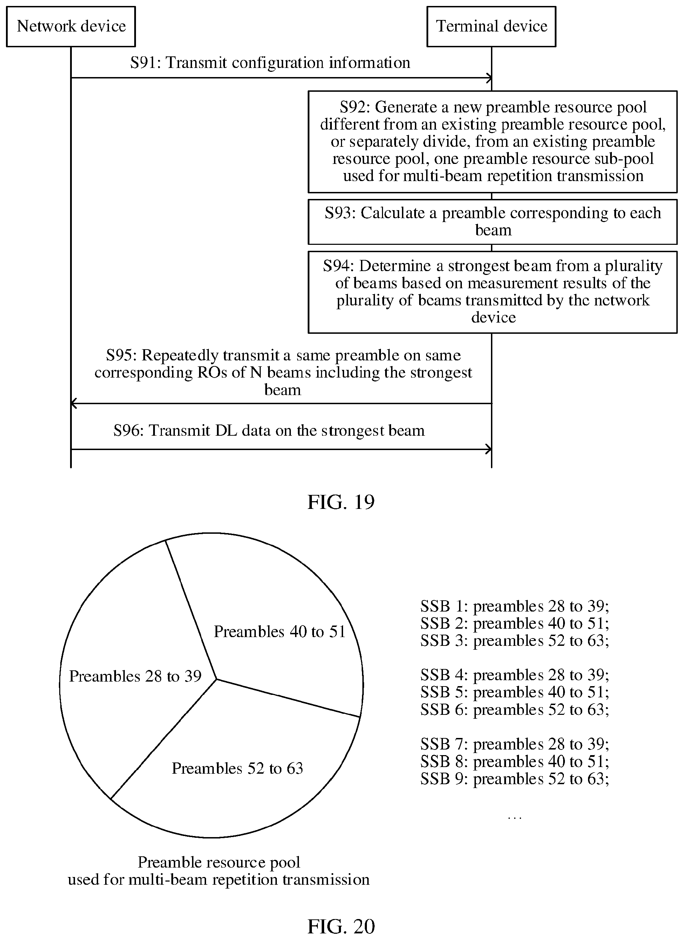

FIG. 19 is a flowchart of repeatedly transmitting a PRACH a plurality of times on different beams according to an embodiment of this application. As shown in FIG. 19, the method may include the following S91 to S96.

S91: A network device transmits configuration information. Correspondingly, a terminal device receives the configuration information from the network device. The configuration information may indicate PRACH resources used for repetition transmission on different beams.

With reference to the descriptions of the foregoing embodiments, the network device may use the following two configuration manners.

In a first configuration manner, the configuration information may include the following parameters:
a parameter msgA-TotalNumberofRA-Preambles-r_{CE}, used for configuring a total quantity of new preambles;
a parameter zeroCorrelationZoneConfig-r_{CE}, used for configuring a quantity N_{cs} of bits by which a root sequence of a new preamble is shifted each time;
a parameter msgA-PRACH-RootSequenceIndex-r_{CE}, used for configuring a length L_{RA} of the root sequence of the new preamble and a root index;
a parameter prach-ConfigurationIndex, used for configuring a time domain resource of a preamble used for multi-beam repetition transmission;
a parameter msg-FrequencyStart and a parameter msg-FDM, where the parameter msg-FrequencyStart is used for determining a start position of a frequency domain resource of the PRACH, and the parameter msg-FDM is used for determining a quantity of RBs occupied in frequency domain; and
a parameter ssb-perRACH-OccasionAndCB-PreamblesPerSSB, used for configuring a mapping relationship between an RO and an SSB.

In a second configuration manner, the configuration information may include the following parameters:
a parameter msgA-TotalNumberofRA-Preambles-r16, used for configuring a total quantity of existing preambles;
a parameter zeroCorrelationZoneConfig, used for configuring a quantity N_{cs} of bits by which a root sequence of an existing preamble is shifted each time;
a parameter msgA-PRACH-RootSequencelndex-r16, used for configuring a length L_{RA} of the root sequence of the existing preamble and a root index;
an index of a start preamble in a preamble resource sub-pool used for multi-beam repetition transmission, where the resource sub-pool belongs to a part of an existing preamble resource pool, in other words, the resource sub-pool is included in the existing preamble resource pool;
a parameter numererOfRA-PremblesRepetion-MultiBeam, and a quantity of preambles in the preamble resource sub-pool used for the multi-beam repetition transmission, where the resource sub-pool belongs to the part of the existing preamble resource pool, in other words, the resource sub-pool is included in the existing preamble resource pool;
a parameter prach-ConfigurationIndex, used for configuring a time domain resource of a preamble used for the multi-beam repetition transmission;
a parameter msg-FrequencyStart and a parameter msg-FDM, where the parameter msg-FrequencyStart is used for determining a start position of a frequency domain resource of the PRACH, and the parameter msg-FDM is used for determining a quantity of RBs occupied in frequency domain; and
a parameter ssb-perRACH-OccasionAndCB-PreamblesPerSSB, used for configuring a mapping relationship between an RO and an SSB.

It should be noted that the parameter msgA-TotalNumberofRA-Preambles-r_{CE} in the first configuration manner and the parameter numberOfRA-PremblesRepetion-MultiBeam in the second configuration manner may both be used for configuring a quantity of preambles used for the multi-beam repetition transmission.

Regardless of whether the first configuration manner or the second configuration manner is used, the terminal device cannot determine ROs of which beams a same preamble is repeatedly transmitted on. In a first possible implementation, the terminal device may randomly select ROs of several beams to repeatedly transmit the preamble. However, signal strength of the randomly selected beam may be weak, causing a poor coverage enhancement effect. In a second possible implementation, the network device may configure, for the terminal device, K beams used for repeatedly transmitting the preamble.

For example, for the second possible implementation, to determine the K beams used for repeatedly transmitting the same preamble, the configuration information may further include the following parameter ①.
① A parameter msg1-repetition-multibeam-number (which may be referred to as a fourth parameter) is used for configuring the quantity K of the beams for repeatedly transmitting the preamble, that is, the same preamble is repeatedly transmitted on the K beams. K is an integer greater than or equal to 2.

It should be understood that a larger value of the quantity K of the beams used for repeatedly transmitting the preamble indicates more beams used for combination, and a larger gain generated by combining PRACHs transmitted on a plurality of beams indicates a better coverage enhancement effect.

In addition to the foregoing parameter ①, the configuration information transmitted by the network device may further include the following parameters ②.

② A parameter msg1-repetion-multibeam-enable (which may be referred to as a fifth parameter) indicates whether to enable the repetition transmission of the same preamble on the different beams.

In an optional implementation, the parameter msg1-repetion-multibeam-enable may be enumerated.

For example, if the parameter msg1-repetion-multibeam-enable is in the following form:
msg1-repetion-multibeam-enable ENUMERATED {enabled},
the parameter indicates to enable (enable) the repetition transmission of the same preamble on the different beams.

For another example, if the parameter msg1-repetion-multibeam-enable is in the following form:
msg1-repetion-multibeam-enable ENUMERATED {disenabled},
the parameter indicates to disenable (disenable) the repetition transmission of the same preamble on the different beams.

For another example, the network device may not configure the parameter msg1-repetion-multibeam-enable, in other words, the parameter msg1-repetion-multibeam-enable is not carried in the configuration information. In this case, the repetition transmission of the same preamble on the different beams is disenabled by default.

In an optional implementation, the parameter msg1-repetion-multibeam-enable may be numeric.

For example, when msg1-repetion-multibeam-enable=0, it indicates to enable the repetition transmission of the same preamble on the different beams, and when msg1-repetion-multibeam-enable=1, it indicates to disenable the repetition transmission of the same preamble on the different beams.

For another example, when msg1-repetion-multibeam-enable=1, it indicates to enable the repetition transmission of the same preamble on the different beams, and when msg1-repetion-multibeam-enable=0, it indicates to disenable the repetition transmission of the same preamble on the different beams.

It should be understood that the parameter msg1-repetion-multibeam-enable is equivalent to an enable switch. The parameter is set, so that the terminal device can be triggered to perform a procedure of multi-beam repetition transmission.

S92: If the configuration information of the network device includes: the parameter msgA-TotalNumberofRA-Preambles-r_{CE}, the parameter zeroCorrelationZoneConfig-r_{CE}, and the parameter msgA-PRACH-RootSequenceIndex-r_{CE}, the terminal device generates one new preamble resource pool, that is, a first resource pool, different from the existing preamble resource pool.

Alternatively, if the configuration information of the network device includes: the parameter msgA-TotalNumberofRA-Preambles-r16, the parameter zeroCorrelationZoneConfig, the parameter msgA-PRACH-RootSequencelndex-r16, the index of the start preamble used for the multi-beam repetition transmission, and the parameter numberOfRA-PremblesRepetion-MultiBeam, the terminal device separately divides, from the existing preamble resource pool, one preamble resource sub-pool used for the multi-beam repetition transmission.

For a specific implementation of S92, refer to the descriptions of the foregoing S71 and S72. Details are not described herein again.

S93: The terminal device calculates a preamble corresponding to each beam based on the parameter msgA-TotalNumberofRA-Preambles-r_{CE}, the quantity K of the beams used for repeatedly transmitting the preamble, and the first resource pool or based on the parameter numberOfRA-PremblesRepetion-MultiBeam, the quantity K of the beams used for repeatedly transmitting the preamble, and the first resource pool.

If the configuration information includes the parameter msgA-TotalNumberofRA-Preambles-r_{CE} and the parameter K, the terminal device may use a formula msgA-TotalNumberofRA-Preambles-r_{CE}/K, to calculate a quantity of preambles corresponding to each beam. Alternatively, if the configuration information includes the parameter numberOfRA-PremblesRepetion-MultiBeam and the parameter K, the terminal device may use a formula numberOfRA-PremblesRepetion-MultiBeam/K, to calculate a quantity of preambles corresponding to each beam.

In an optional implementation, the parameter K not only may represent the quantity of the beams used for repeatedly transmitting the preamble, but also may indicate that the same preamble is reused every K beams.

For example, it is assumed that numberOfRA-PremblesRepetion-MultiBeam=36, the index of the start preamble is 28, and K = 3. In this case, a quantity of preambles that can be used by each SSB is 12. As shown in FIG. 20, a preamble resource pool used for multi-beam repetition transmission includes: preambles 28 to 63. When the multi-beam repetition transmission is performed, preambles that can be used by each beam are as follows: SSB 1: 28 to 39; SSB 2: 40 to 51; SSB 3: 52 to 63; SSB 4: 28 to 39; SSB 5: 40 to 51; SSB 6: 52 to 63; SSB 7: 28 to 39; SSB 8: 40 to 51; SSB 9: 52 to 63..., and so on. The preambles are reused every three beams.

S94: The terminal device determines a strongest beam from a plurality of beams based on measurement results of the plurality of beams transmitted by the network device.

After the terminal device determines the strongest beam from the beam, the terminal device may determine, based on the strongest beam, the K beams used for repeatedly transmitting the preamble. With reference to the descriptions of the foregoing S93, the terminal device may allocate a usable preamble for each of the K beams based on the configuration information.

In a possible implementation, the terminal device may randomly select one preamble from preambles of the K beams selected for the repetition transmission, and separately transmit the preamble on same corresponding ROs of the K beams. However, this manner has a problem: The network device cannot determine which beam in the K beams is the strongest beam, but randomly selects one beam from the K beams as the strongest beam. Consequently, a non-strongest beam may be incorrectly used as the strongest beam. To resolve this kind of problem, an embodiment of this application provides another possible implementation: One preamble is randomly selected from a preamble corresponding to the strongest beam, and then the preamble is repeatedly transmitted on the same corresponding ROs of the K beams.

S95: The terminal device repeatedly transmits the same preamble on the same corresponding ROs of the K beams including the strongest beam.

Received signal strength of each of the K beams is greater than received signal strength of another beam, in other words, the K beams are K beams with downlink signals that have the best signal quality. The "repeatedly transmits the same preamble on the same corresponding ROs of the K beams" means that one preamble is transmitted on ROs that have a same number and that are of the K beams, and preambles transmitted on the ROs are the same. The preamble is one preamble randomly selected by the terminal device from the preamble corresponding to the strongest beam.

It should be noted that the K beams are K spatially adjacent beams continuously transmitted by the network device, in other words, during broadcast of the K beams, the network device does not broadcast another beam.

The following describes, by using an example, a manner of selecting the K beams.

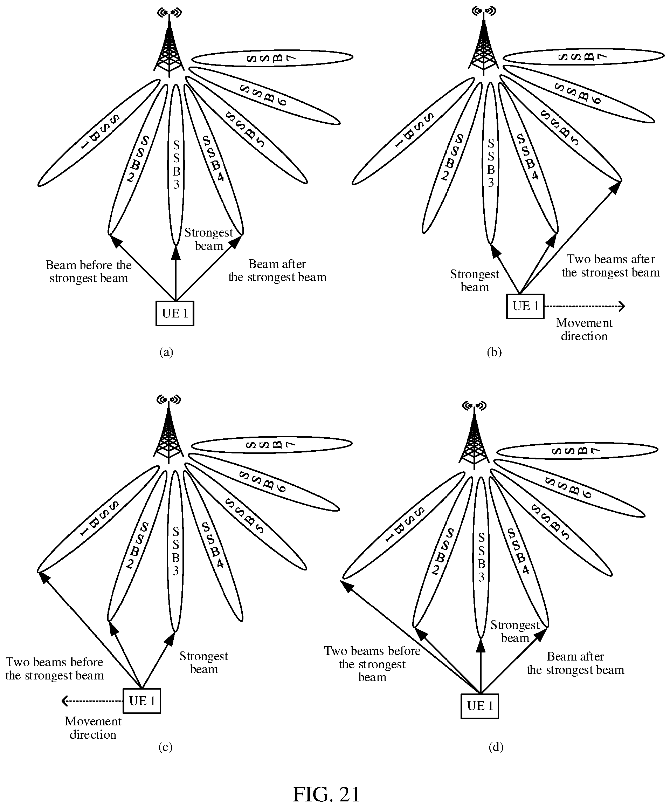

In a first implementation, the K beams include: the strongest beam, a beam broadcast before the strongest beam, and a beam broadcast after the strongest beam. For example, as shown in (a) in FIG. 21, the network device sequentially broadcasts an SSB 1, an SSB 2, an SSB 3, an SSB 4, an SSB 5, an SSB 6, and an SSB 7. After measuring these beams, UE 1 determines the SSB 3 as the strongest beam. If K=3, the UE 1 may repeatedly transmit the same preamble on same corresponding ROs of the SSB 2, the SSB 3, and the SSB 4. The preamble is one preamble randomly selected by the UE 1 from a preamble corresponding to the SSB 3.

In a second implementation, the K beams determined by the terminal device based on a movement direction include: the strongest beam, and a beam broadcast after the strongest beam, where a beam direction of the beam broadcast after the strongest beam coincides with the movement direction of the terminal device. For example, as shown in (b) in FIG. 21, the network device sequentially broadcasts an SSB 1, an SSB 2, an SSB 3, an SSB 4, an SSB 5, an SSB 6, and an SSB 7. After measuring these beams, UE 1 determines the SSB 3 as the strongest beam. If K=3, and a movement direction of the terminal device approaches to a beam direction of the SSB 4, the UE 1 may repeatedly transmit the same preamble on same corresponding ROs of the SSB 3, the SSB 4, and the SSB 5. The preamble is one preamble randomly selected by the UE 1 from a preamble corresponding to the SSB 3.

In a third implementation, the K beams determined by the terminal device based on a movement direction include: the strongest beam, and a beam broadcast before the strongest beam, where a beam direction of the beam broadcast before the strongest beam coincides with the movement direction of the terminal device. For example, as shown in (c) in FIG. 21, the network device sequentially broadcasts an SSB 1, an SSB 2, an SSB 3, an SSB 4, an SSB 5, an SSB 6, and an SSB 7. After measuring these beams, UE 1 determines the SSB 3 as the strongest beam. If K=3, and the movement direction of the terminal device approaches to a beam direction of the SSB 2, the UE 1 may repeatedly transmit the same preamble on same corresponding ROs of the SSB 1, the SSB 2, and the SSB 3. The preamble is one preamble randomly selected by the UE 1 from a preamble corresponding to the SSB 3.

In a fourth implementation, the foregoing embodiments are described by using an example in which K is an odd number. During actual implementation, K may alternatively be an even number. In this case, the terminal device may determine, based on signal strength of beams, (K-1) beams that are adjacent to the strongest beam and whose signal strength is the strongest. As shown in (d) in FIG. 21, the network device sequentially broadcasts the SSB 1, the SSB 2, the SSB 3, the SSB 4, the SSB 5, the SSB 6, and the SSB 7. After measuring these beams, UE 1 obtains measurement results: SSB 1: -105 dBm, SSB 2: -100 dBm, SSB 3: -80 dBm, SSB 4: -90 dBm, SSB 5: -110 dBm, SSB 6: -115 dBm, and SSB 7: -120 dBm. Because received signal strength of each of the SSB 1, the SSB 2, the SSB 3, and the SSB 4 is greater than received signal strength of another SSB, and the SSB 3 is the strongest beam, the UE 1 may repeatedly transmit the same preamble on same corresponding ROs of the SSB 1, the SSB 2, the SSB 3, and the SSB 4. The preamble is one preamble randomly selected by the terminal device from a preamble corresponding to the SSB 3.

S96: The network device transmits DL data to the terminal device on the strongest beam.

After receiving a repeatedly transmitted PRACH on the K beams, the network device may determine, based on a mapping relationship between a preamble carried in the PRACH and an SSB, the SSB corresponding to the preamble as the strongest beam. In other words, the terminal device notifies, in an implicit notification manner, the network device of information about a beam used by the terminal device, so that the network device can transmit the DL data to the terminal device on the strongest beam.

When positions of terminal devices in a cell are different, strongest beams determined by the terminal devices are also different. When multiple PRACH repetition transmissions on different beams are performed, a beam among a plurality of beams used by the terminal devices may be multiplexed.

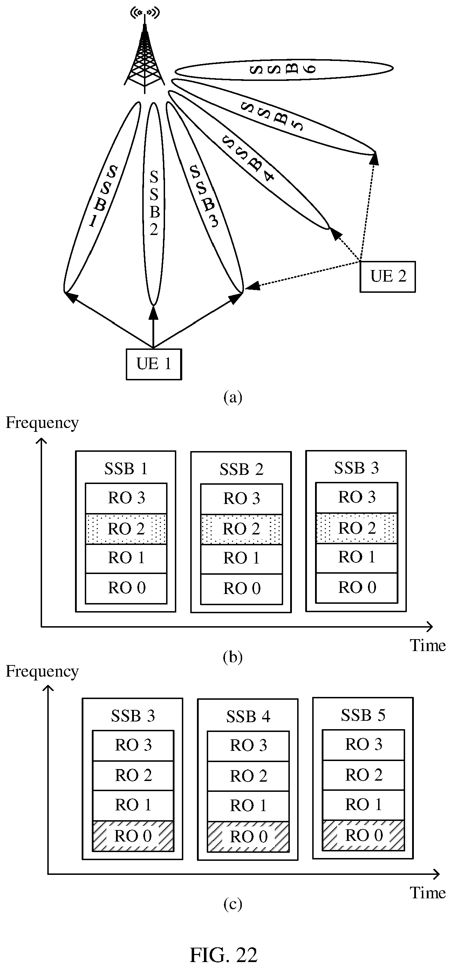

For example, as shown in (a) in FIG. 22, the network device sequentially broadcasts an SSB 1, an SSB 2, an SSB 3, an SSB 4, an SSB 5, and an SSB 6. After measuring these beams, UE 1 determines the SSB 2 as the strongest beam. After measuring these beams, UE 2 determines the SSB 4 as the strongest beam. As shown in (b) of FIG. 22, UE 1 may repeatedly transmit a preamble x on ROs 2 of an SSB 1, an SSB 2, and an SSB 3, where the preamble x is one preamble randomly selected by the terminal device from a preamble corresponding to the SSB 2. As shown in (c) in FIG. 22, UE 2 may repeatedly transmit a preamble y on ROs 0 of an SSB 3, an SSB 4, and an SSB 5, where the preamble y is one preamble randomly selected by the terminal device from a preamble corresponding to the SSB 4. After receiving a PRACH from the UE 1, the network device determines that the SSB 2 is a strongest beam of the UE 1 based on the preamble x. After receiving a PRACH from the UE 2, the network device determines that the SSB 4 is a strongest beam of the UE 2 based on the preamble y.

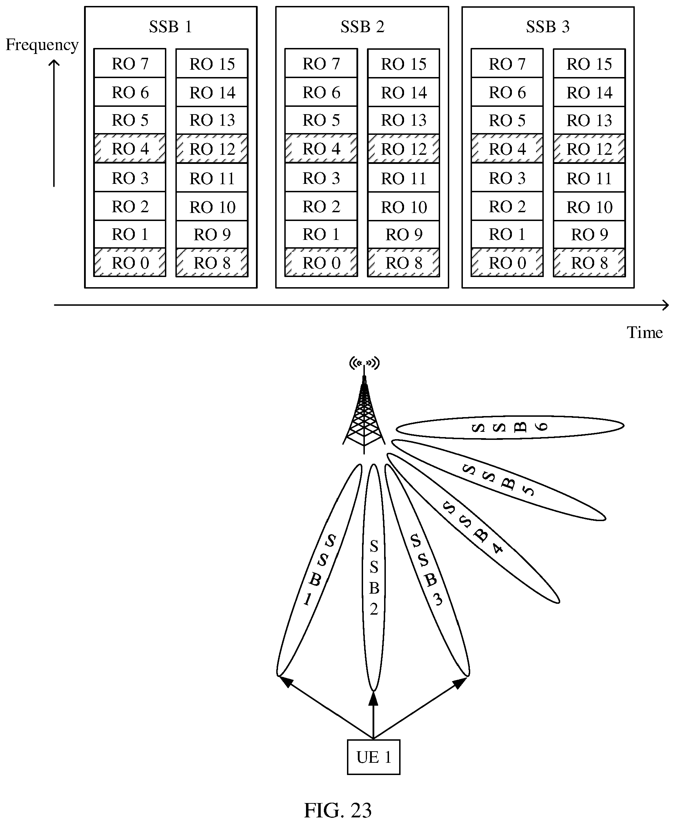

In addition, the foregoing Embodiment 2 is described by using an example in which the terminal device repeatedly transmits the same preamble on K ROs of the K beams, and does not constitute a limitation on this embodiment of this application. As shown in FIG. 23, when UE 1 selects an SSB 1, an SSB 2, and an SSB 3 as beams used for repeatedly transmitting a PRACH, an RO 0, an RO 4, an RO 8, and an RO 12 of the SSB 1, an RO 0, an RO 4, an RO 8, and an RO 12 of the SSB 2, and an RO 0, an RO 4, an RO 8, and an RO 12 of the SSB 3 may all be used for transmitting a same preamble. That is, in this embodiment of this application, multiple PRACH repetition transmissions on a same beam and multiple PRACH repetition transmissions on different beams may also be implemented.

In a resource configuration method for multi-beam repetition transmission provided in this embodiment of this application, two manners of configuring the preamble resource pool used for the repetition transmission are provided. In one manner, one new preamble resource pool used for the multi-beam repetition transmission is generated by using the parameter msgA-TotalNumberofRA-Preambles-rCE, the parameter zeroCorrelationZoneConfig-rCE, and the parameter msgA-PRACH-RootSequenceIndex-rCE. In another manner, one resource sub-pool used for the multi-beam repetition transmission is separately divided from the existing preamble resource pool by using the index of the start preamble in the preamble resource sub-pool used for the repetition transmission, and the quantity of preambles in the preamble resource sub-pool used for the repetition transmission. In addition, in this embodiment of this application, the parameter msg1-repetion-multibeam-enable, and the quantity K of the beams used for repeatedly transmitting the preamble are newly added, to configure, for the terminal device, a code domain resource, a time domain resource, and a frequency domain resource used for the multi-beam repetition transmission. In this way, the terminal device can generate, based on a configuration parameter, the preamble used for the repetition transmission, determine an RO used for transmitting the preamble, and then repeatedly transmit a PRACH a plurality of times on a plurality of beams, so that a plurality of PRACHs are combined to generate a gain. Therefore, coverage enhancement for the PRACH is achieved, and a success rate of random access is further improved. In addition, a preamble that can be used is configured for each of the K beams, and a preamble of the strongest beam is used to perform multi-beam repetition transmission, so that the network device can determine the strongest beam from the K beams, and transmit the DL data to the terminal device on the strongest beam.

It should be noted that, in this embodiment of this application, to illustrate a manner of configuring ROs of SSBs more clearly, an example in which different SSBs use same numbers of ROs is used for descriptions. As shown in FIG. 3 to FIG. 16, manners of numbering ROs in the SSB 1, the SSB 2, and the SSB 3 are all RO 0 to RO 7. This does not constitute a limitation on this embodiment of this application. During actual implementation, the network device may alternatively follow the following principle: The SSBs are first sorted in ascending order according to a rule of first frequency domain and then time domain, and then ROs of all SSBs in preset time (a mapping period or a mapping pattern period) are sorted in ascending order.

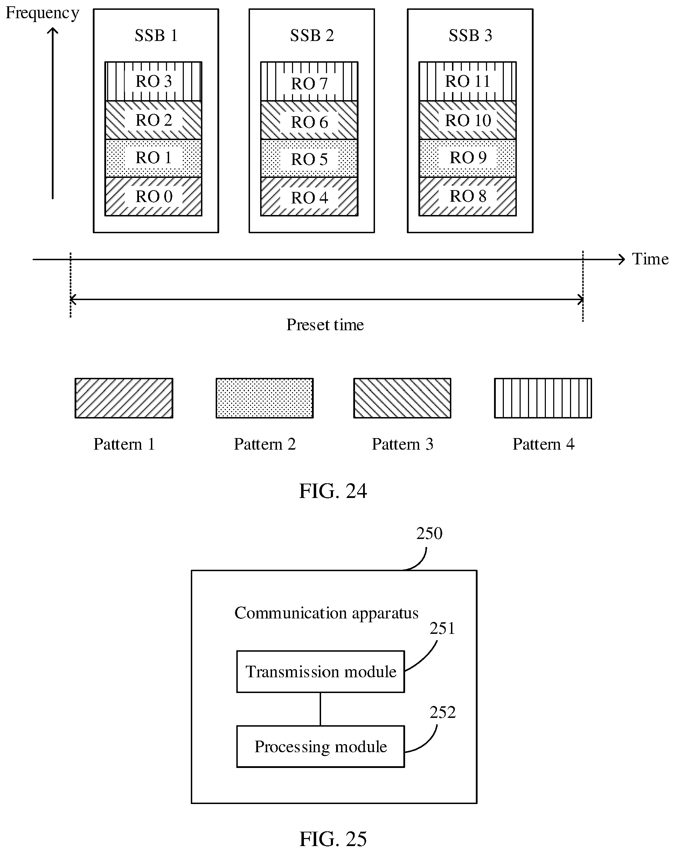

For example, as shown in FIG. 24, three SSBs: an SSB 1, an SSB 2, and an SSB 3 are included in one preset time. A manner of numbering ROs in the SSB 1 is RO 0 to RO 3, a manner of numbering ROs in the SSB 2 is RO 4 to RO 7, and a manner of numbering ROs in the SSB 3 is RO 8 to RO 11. Same corresponding ROs of the three SSBs may be the RO 0, the RO 4, and the RO 8 filled with a pattern 1, the RO 1, the RO 5, and the RO 9 filled with a pattern 2, the RO 2, the RO 6, and the RO 10 filled with a pattern 3, or the RO 3, the RO 7, and the RO 11 filled with a pattern 4. Frequency domain positions of the RO 0, the RO 4, and the RO 8 are the same, and time domain positions of the RO 0, the RO 4, and the RO 8 are different. Frequency domain positions of the RO 1, the RO 5, and the RO 9 are the same, and time domain positions of the RO 1, the RO 5, and the RO 9 are different. Frequency domain positions of the RO 2, the RO 6, and the RO 10 are the same, and time domain positions of the RO 2, the RO 6, and the RO 10 are different. Frequency domain positions of the RO 3, the RO 7, and the RO 11 are the same, and time domain positions of the RO 3, the RO 7, and the RO 11 are different.

FIG. 25 is a diagram of a structure of a communication apparatus according to an embodiment of this application. The communication apparatus 250 may be a terminal device, a chip in a terminal device, a system-on-a-chip, another apparatus that can implement the functions of the terminal device in the foregoing methods, or the like. The communication apparatus 250 may be configured to perform the functions of the terminal device in the foregoing method embodiments. As shown in FIG. 25, the communication apparatus 250 includes: a transmission module 251 and a processing module 252.

The transmission module 251 may be configured to receive configuration information from a network device, where the configuration information may indicate PRACH resources that are on a same beam or different beams and that are used for repetition transmission, and the PRACH resources include: a preamble used for the repetition transmission, and an RO used for repeatedly transmitting the preamble. The processing module 252 may be configured to determine, based on the configuration information, a plurality of ROs of a single beam or ROs of a plurality of beams used for repeatedly transmitting the preamble. The transmission module 251 is further configured to repeatedly transmit the same preamble on a plurality of ROs of one beam or on same corresponding ROs of a plurality of beams based on the configuration information.

In some embodiments, the configuration information may include a preamble configuration parameter. The processing module 252 may be further configured to: generate a first resource pool based on the preamble configuration parameter. The first resource pool includes one or more preambles used for the repetition transmission.

In some embodiments, the preamble configuration parameter may include: a quantity of preambles used for the repetition transmission, a quantity of bits by which a root sequence of the preamble used for the repetition transmission is shifted each time, and a root index of the preamble used for the repetition transmission. The processing module 252 may be specifically configured to: generate the first resource pool based on the quantity of preambles used for the repetition transmission, the quantity of bits by which the root sequence of the preamble used for the repetition transmission is shifted each time, and the root index of the preamble used for the repetition transmission.

In some embodiments, the preamble configuration parameter may include: a start index of the preamble used for the repetition transmission, and a quantity of preambles used for the repetition transmission. The processing module 252 may be specifically configured to: divide the first resource pool from a second resource pool based on the start index of the preamble used for the repetition transmission and the quantity of preambles used for the repetition transmission. The second resource pool may be generated based on the following parameters: a quantity of preambles used for non-repetition transmission, a quantity of bits by which a root sequence of the preamble used for the non-repetition transmission is shifted each time, and a root index of the preamble used for the non-repetition transmission.

In some embodiments, the configuration information may further include: a first parameter and a second parameter, where the first parameter indicates a quantity N of preamble repetition transmissions on the same beam, the second parameter indicates an RO interval at which the preamble is repeatedly transmitted on the same beam, and N is an integer greater than or equal to 2. The processing module 252 may be specifically configured to: determine N ROs in the one beam based on the first parameter and the second parameter, and repeatedly transmit the same preamble on the N ROs.

In some embodiments, the configuration information may further include: a third parameter, where the third parameter indicates whether to enable the repetition transmission of the same preamble on the same beam.

In some embodiments, the configuration information may further include: a fourth parameter, where the fourth parameter indicates a quantity K of beams for multi-beam preamble repetition transmission. The processing module 252 may be specifically configured to: determine a preamble corresponding to each of the K beams based on the fourth parameter, the first resource pool, and the quantity of preambles used for the repetition transmission; and repeatedly transmit the same preamble on same corresponding ROs of the K beams. The K beams include a strongest beam, the strongest beam is a beam with strongest received signal strength on the terminal device among all beams transmitted by the network device, and the same preamble is one preamble randomly selected by the terminal device from a preamble corresponding to the strongest beam.

In some embodiments, the fourth parameter may further indicate to reuse the same preamble every K beams. It may be understood that the preamble used for the repetition transmission may be reused every K beams.

In some embodiments, the configuration information may further include: a fifth parameter, where the fifth parameter indicates whether to enable the repetition transmission of the same preamble on the different beams. It may be understood that the fifth parameter is equivalent to an enable switch. The parameter is set, so that the terminal device can be triggered to perform a procedure of multiple PRACH repetition transmissions on different beams.

In some embodiments, the same corresponding ROs of the K beams are: ROs that have a same number and that are of the plurality of beams.

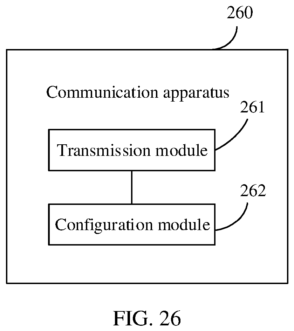

FIG. 26 is a diagram of a structure of another communication apparatus according to an embodiment of this application. The communication apparatus 260 may be a network device, a chip in a network device, a system-on-a-chip, another apparatus that can implement the functions of the network device in the foregoing methods, or the like. The communication apparatus 260 may be configured to perform the functions of the network device in the foregoing method embodiments. As shown in FIG. 26, the communication apparatus 260 includes: a transmission module 261 and a configuration module 262.

The transmission module 261 may be configured to transmit, to a terminal device, configuration information configured by the configuration module 262, where the configuration information may indicate PRACH resources that are on a same beam or different beams and that are used for repetition transmission, and the PRACH resources include: a preamble used for the repetition transmission, and an RO used for repeatedly transmitting the preamble. The transmission module 261 may be further configured to receive, from the terminal device, a plurality of PRACHs on a plurality of ROs from one beam or a plurality of PRACHs on ROs from a plurality of beams, where each of the plurality of PRACHs carries the same preamble.

In some embodiments, the configuration information may include a preamble configuration parameter, and the preamble configuration parameter is used for generating a preamble resource pool, that is, a first resource pool, for the repetition transmission. The first resource pool includes one or more preambles used for the repetition transmission.

In some embodiments, the preamble configuration parameter may include: a quantity of preambles used for the repetition transmission, a quantity of bits by which a root sequence of the preamble used for the repetition transmission is shifted each time, and a root index of the preamble used for the repetition transmission.

In some embodiments, the preamble configuration parameter may include: a start index of the preamble used for the repetition transmission, and a quantity of preambles used for the repetition transmission.

In some embodiments, the configuration information may include: a first parameter and a second parameter, where the first parameter indicates a quantity N of preamble repetition transmissions on the same beam, and the second parameter indicates an RO interval at which the preamble is repeatedly transmitted on the same beam.

In some embodiments, the configuration information may further include: a third parameter, where the third parameter indicates whether to enable the repetition transmission of the same preamble on the same beam.

In some embodiments, the configuration information may further include: a fourth parameter, where the fourth parameter indicates a quantity K of beams for multi-beam preamble repetition transmission.

In some embodiments, the fourth parameter may further indicate to reuse the same preamble every K beams.

In some embodiments, the configuration information may further include: a fifth parameter, where the fifth parameter indicates whether to enable the repetition transmission of the same preamble on the different beams.

An embodiment of this application further provides a computer-readable storage medium. The computer-readable storage medium stores a computer program. When the computer-readable storage medium is run on a terminal device or a network device, the terminal device or the network device is caused to perform the method described above. The computer-readable storage medium may be any usable medium accessible by a computer, or a data storage device, such as a server or a data center, integrating one or more usable media. The usable medium may be a magnetic medium (for example, a floppy disk, a hard disk drive, or a magnetic tape), an optical medium, a semiconductor medium (for example, a solid-state disk (solid-state disk, SSD)), or the like.

An embodiment of this application further provides a computer program product. The computer program product includes computer program code. When the computer program code is run on a computer, the computer is caused to perform the methods in the foregoing embodiments.

An embodiment of this application further provides a chip. The chip is coupled to a memory. The chip is configured to read and execute a computer program or instructions stored in the memory, to perform the methods in the foregoing embodiments. The chip may be a general-purpose processor or may be a special-purpose processor. It should be noted that the chip may be implemented by using the following circuits or components: one or more field programmable gate arrays (field programmable gate arrays, FPGAs), a programmable logic device (programmable logic device, PLD), a controller, a state machine, a gate logic, a discrete hardware part, any other proper circuits, or any combination of circuits that can execute various functions described throughout this application.

It should be noted that, in the specification, claims, and accompanying drawings of this application, the terms "first", "second", and so on are intended to distinguish between different objects but do not indicate a particular order. In addition, the terms "include", "have", and any variant thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

It should be understood that, in this application, "at least one" means one or more, "a plurality of" means two or more, "at least two" means two, three, or more, and "and/or" is used to describe an association relationship between associated objects, and indicates that there may be three relationships. For example, "A and/or B" may indicate three cases: Only A exists, only B exists, and both A and B exist, where A and B may be singular or plural. The character "/" in this specification usually indicates an "or" relationship between the associated objects. "At least one of the following items" or a similar expression thereof indicates any combination of these items, including a single item or any combination of a plurality of items. For example, at least one of a, b, or c may indicate: a, b, c, "a and b", "a and c", "b and c", or "a, b, and c", where a, b, and c may be singular or plural.

It should be understood that, in embodiments of this application, "B corresponding to A" indicates that B is associated with A. For example, B may be determined based on A. It should be further understood that determining B based on A does not mean determining B only based on A, and B may also be determined based on A and/or other information. In addition, "connected" in embodiments of this application refers to various connection manners such as a direct connection or an indirect connection, to implement communication between devices. This is not limited in embodiments of this application.

Unless otherwise specified, the term "transmission" (transmit/transmission) in embodiments of this application refers to two-way transmission, including transmitting and/or receiving actions. Specifically, the "transmission" in embodiments of this application includes data transmission, data receiving, or data transmission and data receiving. Alternatively, the data transmission herein includes uplink and/or downlink data transmission. The data may include a channel and/or a signal, the uplink data transmission is uplink channel transmission and/or uplink signal transmission, and the downlink data transmission is downlink channel transmission and/or downlink signal transmission.

Through the foregoing descriptions of the implementations, a person skilled in the art may clearly understand that, for the purpose of convenient and brief descriptions, division into the foregoing functional modules is merely used as an example for descriptions. During actual application, the foregoing functions may be allocated to different functional modules and implemented based on a requirement. That is, an inner structure of an apparatus is divided into different functional modules, to implement a part or all of the functions described above.

In the several embodiments provided in this application, it should be understood that the disclosed apparatus and method may be implemented in other manners. For example, the described apparatus embodiment is merely an example. For example, division into the modules or the units is merely logical function division and may be other division during actual implementation. For example, a plurality of units or components may be combined or integrated into another apparatus, or some features may be ignored or not performed. In addition, the displayed or discussed mutual couplings or direct couplings or communication connections may be implemented by using some interfaces. The indirect couplings or communication connections between the apparatuses or units may be implemented in electronic, mechanical, or other forms.

The units described as separate parts may or may not be physically separate, and parts displayed as units may be one or more physical units, that is, may be located in one place, or may be distributed in a plurality of different places. A part or all of the units may be selected based on actual requirements to achieve the objectives of the solutions of embodiments.

In addition, functional units in embodiments of this application may be integrated into one processing unit, each of the units may exist alone physically, or two or more units may be integrated into one unit. The integrated unit may be implemented in a form of hardware, or may be implemented in a form of a software functional unit.

If the integrated unit is implemented in a form of a software functional unit and sold or used as an independent product, the integrated unit may be stored in a readable storage medium. Based on such an understanding, the technical solutions of embodiments of this application essentially, or the part contributing to the conventional technology, or all or a part of the technical solutions may be implemented in a form of a software product. The software product is stored in a storage medium, and includes several instructions for instructing a device, for example, a single-chip microcomputer or a chip, or a processor to perform all or a part of the steps of the methods in embodiments of this application. The storage medium includes: a USB flash drive, a removable hard disk, a ROM, a RAM, a magnetic disk, an optical disc, or the like that can store program code.

The foregoing content is merely specific implementations of this application, but is not intended to limit the protection scope of this application. Any variation or replacement within the technical scope disclosed in this application shall fall within the protection scope of this application. Therefore, the protection scope of this application shall be subject to the protection scope of the claims.

## Claims

1. A preamble repetition transmission method, comprising:
receiving (S21, S71, S91), by a terminal device (02), configuration information from a network device (01), wherein the configuration information indicates physical random access channel, PRACH, resources that are on a same beam or different beams and that are used for repetition transmission, and the PRACH resources comprise: a preamble used for the repetition transmission, and a random access signal occasion, RO, used for repeatedly transmitting the preamble; and
repeatedly transmitting (S26, S75, S95), by the terminal device (02), the same preamble on a plurality of ROs of one beam or on same corresponding ROs of a plurality of beams based on the configuration information;
wherein the configuration information comprises a preamble configuration parameter; and
the method further comprises:
generating (S22, S72, S92), by the terminal device (02), a first resource pool based on the preamble configuration parameter, the first resource pool comprises one or more preambles used for the repetition transmission, and the same preamble is one preamble randomly selected by the terminal device (02) from the first resource pool;
wherein the preamble configuration parameter comprises: a quantity of preambles used for the repetition transmission, a quantity of bits by which a root sequence of the preamble used for the repetition transmission is shifted each time, and a root index of the preamble used for the repetition transmission; or
wherein the preamble configuration parameter comprises: a start index of the preamble used for the repetition transmission, and a quantity of preambles used for the repetition transmission; and
the generating (S22, S72, S92), by the terminal device (02), a first resource pool based on the preamble configuration parameter comprises:
dividing (S92), by the terminal device (02), the first resource pool from a second resource pool based on the start index of the preamble used for the repetition transmission and the quantity of preambles used for the repetition transmission, wherein
the second resource pool is generated based on the following parameters: a quantity of preambles used for non-repetition transmission, a quantity of bits by which a root sequence of the preamble used for the non-repetition transmission is shifted each time, and a root index of the preamble used for the non-repetition transmission.

2. The method according to claim 1, wherein the configuration information comprises: a first parameter and a second parameter, wherein the first parameter indicates a quantity N of preamble repetition transmissions on the same beam, the second parameter indicates an RO interval at which the preamble is repeatedly transmitted on the same beam, and N is an integer greater than or equal to 2; and
the repeatedly transmitting (S26, S75, S95), by the terminal device (02), the same preamble on a plurality of ROs of one beam based on the configuration information comprises:
determining (S94), by the terminal device (02), N ROs in the one beam based on the first parameter and the second parameter, and repeatedly transmitting (S26, S74, S95) the same preamble on the N ROs.

3. The method according to claim 2, wherein the N ROs belong to a same group, and the same group is one group randomly selected by the terminal device (02) from groups comprised in the one beam; and
before the determining (S94) N ROs in the one beam, the method further comprises:
determining (S23), by the terminal device (02), a total quantity M of ROs comprised in the same beam in preset time; and
determining (S26), by the terminal device (02) by using the following formula, each group that is in the same beam and that is used for repeatedly transmitting the preamble: $\left\{\left(s+nk\right)mod M\right\} ,$ wherein
s represents a 1^{st} RO mapped in each group in the same beam, n = (0, 1..., N - 1) , k represents the RO interval at which the preamble is repeatedly transmitted on the same beam, mod is a modulo operator, and s ≤ M.

4. The method according to claim 3, wherein the preset time is a mapping period or a mapping pattern period.

5. The method according to claim 3, wherein when the configuration information further comprises a preset rule, the ROs comprised in the same beam in the preset time are sorted according to a rule of first time domain and then frequency domain; or when the configuration information does not comprise the preset rule, the ROs comprised in the same beam in the preset time are sorted according to a rule of first frequency domain and then time domain.

6. The method according to claim 3, wherein
time domain resources of the ROs in the one group are the same, and frequency domain resources of the ROs in the one group are different; or
time domain resources of the ROs in the one group are different, and frequency domain resources of the ROs in the one group are the same; or
ROs that are in the one group and that have different time domain resources and different frequency domain resources exist.

7. The method according to any one of claims 2 to 6, wherein the one beam is a strongest beam, and the strongest beam is a beam with strongest received signal strength on the terminal device (02) among all beams transmitted by the network device (01).

8. The method according to any one of claims 2 to 7, wherein the configuration information further comprises: a third parameter, wherein the third parameter indicates whether to enable the repetition transmission of the same preamble on the same beam.

9. The method according to claim 1, wherein the configuration information comprises: a fourth parameter, wherein the fourth parameter indicates a quantity K of beams for multi-beam preamble repetition transmission, and K is an integer greater than or equal to 2; the preamble configuration parameter comprises: the quantity of preambles used for the repetition transmission; and
the repeatedly transmitting (S26, S75, S95), by the terminal device (02), the same preamble on same corresponding ROs of a plurality of beams based on the configuration information comprises:
determining, by the terminal device (02), a preamble corresponding to each of the K beams based on the fourth parameter, the first resource pool, and the quantity of preambles used for the repetition transmission; and
repeatedly transmitting (S26, S75, S95), by the terminal device (02), the same preamble on same corresponding ROs of the K beams, wherein the K beams comprise a strongest beam (S94), the strongest beam is a beam with strongest received signal strength on the terminal device (02) among all beams transmitted by the network device (01), and the same preamble is one preamble randomly selected by the terminal device (02) from a preamble corresponding to the strongest beam.

10. The method according to claim 9, wherein a quantity of preambles corresponding to each of the K beams is equal to: a value obtained by dividing (S92) the quantity of preambles used for the repetition transmission by the quantity K.

11. The method according to claim 9, wherein the fourth parameter further indicates to reuse the same preamble every K beams.

12. The method according to claim 9, wherein
signal strength of the K beams is greater than signal strength of another beam transmitted by the network device (01).

13. The method according to claim 9, wherein the K beams comprise:
the strongest beam, a beam broadcast before the strongest beam, and a beam broadcast after the strongest beam; or
the strongest beam, and a beam broadcast before the strongest beam; or
the strongest beam, and a beam broadcast after the strongest beam.

14. The method according to any one of claims 9 to 12, wherein the configuration information further comprises: a fifth parameter, wherein the fifth parameter indicates whether to enable the repetition transmission of the same preamble on the different beams.

15. The method according to any one of claims 9 to 14, wherein
the same corresponding ROs of the K beams are: ROs that have a same number and that are of the K beams.

16. A preamble repetition transmission method, comprising:
transmitting (S21, S71, S91), by a network device (01), configuration information to a terminal device (02), wherein the configuration information indicates physical random access channel, PRACH, resources that are on a same beam or different beams and that are used for repetition transmission, and the PRACH resources comprise: a preamble used for the repetition transmission, and a random access signal occasion, RO, used for repeatedly transmitting the preamble; and
receiving (S74, S75), by the network device (01) from the terminal device (02), a plurality of PRACHs on a plurality of ROs from one beam or a plurality of PRACHs on ROs from a plurality of beams, wherein each of the plurality of PRACHs carries the same preamble;
wherein the one beam is a strongest beam, or the plurality of beams comprise a strongest beam, wherein the strongest beam is a beam with strongest received signal strength on the terminal device (02) among all beams transmitted by the network device (01); and
the method further comprises:
transmitting (S27, S76, S96), by the network device (01), downlink data to the terminal device (02) on the strongest beam;
wherein the configuration information comprises a preamble configuration parameter, and the preamble configuration parameter is used for generating a first preamble resource pool comprising one or more preambles used for the repetition transmission; and
wherein the preamble configuration parameter comprises: a quantity of preambles used for the repetition transmission, a quantity of bits by which a root sequence of the preamble used for the repetition transmission is shifted each time, and a root index of the preamble used for the repetition transmission; or
the preamble configuration parameter comprises: a start index of the preamble used for the repetition transmission, and a quantity of preambles used for the repetition transmission and the first preamble resource pool is generated by dividing the first resource pool from a second resource pool based on the start index of the preamble used for the repetition transmission and the quantity of preambles used for the repetition transmission, wherein the second resource pool is generated based on the following parameters: a quantity of preambles used for non-repetition transmission, a quantity of bits by which a root sequence of the preamble used for the non-repetition transmission is shifted each time, and a root index of the preamble used for the non-repetition transmission.

## Patentansprüche

1. Präambel-Wiederholungsübertragungsverfahren, umfassend:
Empfangen (S21, S71, S91), durch eine Endgerätevorrichtung (02), von Konfigurationsinformationen von einer Netzwerkvorrichtung (01), wobei die Konfigurationsinformationen physikalische Direktzugriffskanal-, PRACH-, Ressourcen angeben, die sich auf demselben Strahl oder verschiedenen Strahlen befinden und die für eine Wiederholungsübertragung verwendet werden, und die PRACH-Ressourcen umfassen: eine für die Wiederholungsübertragung verwendete Präambel und eine Direktzugriffssignalgelegenheit, RO, die zum wiederholten Übertragen der Präambel verwendet wird; und
wiederholtes Übertragen (S26, S75, S95), durch die Endgerätevorrichtung (02), derselben Präambel auf einer Mehrzahl von ROs eines Strahls oder auf denselben entsprechenden ROs einer Mehrzahl von Strahlen basierend auf den Konfigurationsinformationen;
wobei die Konfigurationsinformationen einen Präambel-Konfigurationsparameter umfassen; und
das Verfahren ferner umfasst:
Erzeugen (S22, S72, S92), durch die Endgerätevorrichtung (02), eines ersten Ressourcenpools basierend auf dem Präambel-Konfigurationsparameter, wobei der erste Ressourcenpool eine oder mehrere für die Wiederholungsübertragung verwendete Präambeln umfasst, und dieselbe Präambel eine Präambel ist, die durch die Endgerätevorrichtung (02) zufällig aus dem ersten Ressourcenpool ausgewählt wird;
wobei der Präambel-Konfigurationsparameter umfasst: eine Menge an für die Wiederholungsübertragung verwendeten Präambeln, eine Menge an Bits, um die eine Wurzelsequenz der für die Wiederholungsübertragung verwendeten Präambel jedes Mal verschoben wird, und einen Wurzelindex der für die Wiederholungsübertragung verwendeten Präambel; oder
wobei der Präambel-Konfigurationsparameter umfasst: einen Startindex der für die Wiederholungsübertragung verwendeten Präambel und eine Menge an für die Wiederholungsübertragung verwendeten Präambeln; und
das Erzeugen (S22, S72, S92), durch die Endgerätevorrichtung (02), eines ersten Ressourcenpools basierend auf dem Präambel-Konfigurationsparameter umfasst:
Abtrennen (S92), durch die Endgerätevorrichtung (02), des ersten Ressourcenpools von einem zweiten Ressourcenpool basierend auf dem Startindex der für die Wiederholungsübertragung verwendeten Präambel und der Menge an für die Wiederholungsübertragung verwendeten Präambeln, wobei
der zweite Ressourcenpool basierend auf den folgenden Parametern erzeugt wird: einer Menge an für eine Nicht-Wiederholungsübertragung verwendeten Präambeln, einer Menge an Bits, um die eine Wurzelsequenz der für die Nicht-Wiederholungsübertragung verwendeten Präambel jedes Mal verschoben wird, und einem Wurzelindex der für die Nicht-Wiederholungsübertragung verwendeten Präambel.

2. Verfahren nach Anspruch 1, wobei die Konfigurationsinformationen umfassen: einen ersten Parameter und einen zweiten Parameter, wobei der erste Parameter eine Menge N von Präambel-Wiederholungsübertragungen auf demselben Strahl angibt, der zweite Parameter ein RO-Intervall angibt, in dem die Präambel auf demselben Strahl wiederholt übertragen wird, und N eine ganze Zahl größer als oder gleich 2 ist; und
das wiederholte Übertragen (S26, S75, S95), durch die Endgerätevorrichtung (02), derselben Präambel auf einer Mehrzahl von ROs eines Strahls basierend auf den Konfigurationsinformationen umfasst:
Bestimmen (S94), durch die Endgerätevorrichtung (02), von N ROs in dem einen Strahl basierend auf dem ersten Parameter und dem zweiten Parameter, und wiederholtes Übertragen (S26, S74, S95) derselben Präambel auf den N ROs.

3. Verfahren nach Anspruch 2, wobei die N ROs zu derselben Gruppe gehören und dieselbe Gruppe eine Gruppe ist, die durch die Endgerätevorrichtung (02) zufällig aus Gruppen ausgewählt wird, die in dem einen Strahl umfasst sind; und
vor dem Bestimmen (S94) von N ROs in dem einen Strahl das Verfahren ferner umfasst:
Bestimmen (S23), durch die Endgerätevorrichtung (02), einer Gesamtmenge M von ROs, die in demselben Strahl in einer voreingestellten Zeit umfasst sind; und
Bestimmen (S26), durch die Endgerätevorrichtung (02) durch Verwenden der folgenden Formel, jeder Gruppe, die sich in demselben Strahl befindet und die zum wiederholten Übertragen der Präambel verwendet wird: $\left\{\left(s+nk\right)mod M\right\} ,$ wobei
s eine erste RO repräsentiert, die in jeder Gruppe in demselben Strahl abgebildet ist, n = (0, 1 ..., N - 1), k das RO-Intervall repräsentiert, in dem die Präambel auf demselben Strahl wiederholt übertragen wird, mod ein Modulo-Operator ist und s ≤ M.

4. Verfahren nach Anspruch 3, wobei die voreingestellte Zeit eine Abbildungsperiode oder eine Abbildungsmusterperiode ist.

5. Verfahren nach Anspruch 3, wobei, wenn die Konfigurationsinformationen ferner eine voreingestellte Regel umfassen, die ROs, die in demselben Strahl in der voreingestellten Zeit umfasst sind, gemäß einer Regel von zuerst Zeitbereich und dann Frequenzbereich sortiert werden; oder wenn die Konfigurationsinformationen die voreingestellte Regel nicht umfassen, die ROs, die in demselben Strahl in der voreingestellten Zeit umfasst sind, gemäß einer Regel von zuerst Frequenzbereich und dann Zeitbereich sortiert werden.

6. Verfahren nach Anspruch 3, wobei
Zeitbereichsressourcen der ROs in der einen Gruppe gleich sind und Frequenzbereichsressourcen der ROs in der einen Gruppe unterschiedlich sind; oder
Zeitbereichsressourcen der ROs in der einen Gruppe unterschiedlich sind und Frequenzbereichsressourcen der ROs in der einen Gruppe gleich sind; oder
ROs, die sich in der einen Gruppe befinden und die unterschiedliche Zeitbereichsressourcen und unterschiedliche Frequenzbereichsressourcen aufweisen, existieren.

7. Verfahren nach einem der Ansprüche 2 bis 6, wobei der eine Strahl ein stärkster Strahl ist und der stärkste Strahl ein Strahl mit stärkster empfangener Signalstärke an der Endgerätevorrichtung (02) unter allen von der Netzwerkvorrichtung (01) übertragenen Strahlen ist.

8. Verfahren nach einem der Ansprüche 2 bis 7, wobei die Konfigurationsinformationen ferner umfassen: einen dritten Parameter, wobei der dritte Parameter angibt, ob die Wiederholungsübertragung derselben Präambel auf demselben Strahl zu aktivieren ist.

9. Verfahren nach Anspruch 1, wobei die Konfigurationsinformationen umfassen: einen vierten Parameter, wobei der vierte Parameter eine Menge K von Strahlen für Mehrstrahl-Präambel-Wiederholungsübertragung angibt und K eine ganze Zahl größer als oder gleich 2 ist; der Präambel-Konfigurationsparameter umfasst: die Menge an für die Wiederholungsübertragung verwendeten Präambeln; und
das wiederholte Übertragen (S26, S75, S95), durch die Endgerätevorrichtung (02), derselben Präambel auf denselben entsprechenden ROs einer Mehrzahl von Strahlen basierend auf den Konfigurationsinformationen umfasst:
Bestimmen, durch die Endgerätevorrichtung (02), einer jedem der K Strahlen entsprechenden Präambel basierend auf dem vierten Parameter, dem ersten Ressourcenpool und der Menge an für die Wiederholungsübertragung verwendeten Präambeln; und
wiederholtes Übertragen (S26, S75, S95), durch die Endgerätevorrichtung (02), derselben Präambel auf denselben entsprechenden ROs der K Strahlen, wobei die K Strahlen einen stärksten Strahl (S94) umfassen, der stärkste Strahl ein Strahl mit stärkster empfangener Signalstärke an der Endgerätevorrichtung (02) unter allen von der Netzwerkvorrichtung (01) übertragenen Strahlen ist, und dieselbe Präambel eine Präambel ist, die durch die Endgerätevorrichtung (02) zufällig aus einer dem stärksten Strahl entsprechenden Präambel ausgewählt wird.

10. Verfahren nach Anspruch 9, wobei eine Menge an jedem der K Strahlen entsprechenden Präambeln gleich ist wie: ein Wert, der durch Teilen (S92) der Menge an für die Wiederholungsübertragung verwendeten Präambeln durch die Menge K erhalten wird.

11. Verfahren nach Anspruch 9, wobei der vierte Parameter ferner angibt, dieselbe Präambel alle K Strahlen wiederzuverwenden.

12. Verfahren nach Anspruch 9, wobei
eine Signalstärke der K Strahlen größer als eine Signalstärke eines anderen durch die Netzwerkvorrichtung (01) übertragenen Strahls ist.

13. Verfahren nach Anspruch 9, wobei die K Strahlen umfassen:
den stärksten Strahl, einen vor dem stärksten Strahl rundgesendeten Strahl und einen nach dem stärksten Strahl rundgesendeten Strahl; oder
den stärksten Strahl und einen vor dem stärksten Strahl rundgesendeten Strahl; oder
den stärksten Strahl und einen nach dem stärksten Strahl rundgesendeten Strahl.

14. Verfahren nach einem der Ansprüche 9 bis 12, wobei die Konfigurationsinformationen ferner umfassen: einen fünften Parameter, wobei der fünfte Parameter angibt, ob die Wiederholungsübertragung derselben Präambel auf den verschiedenen Strahlen zu aktivieren ist.

15. Verfahren nach einem der Ansprüche 9 bis 14, wobei
die selben entsprechenden ROs der K Strahlen sind: ROs, die eine selbe Nummer aufweisen und die von den K Strahlen sind.

16. Präambel-Wiederholungsübertragungsverfahren, umfassend:
Übertragen (S21, S71, S91), durch eine Netzwerkvorrichtung (01), von Konfigurationsinformationen an eine Endgerätevorrichtung (02), wobei die Konfigurationsinformationen physikalische Direktzugriffskanal-, PRACH-, Ressourcen angeben, die sich auf demselben Strahl oder verschiedenen Strahlen befinden und die für eine Wiederholungsübertragung verwendet werden, und die PRACH-Ressourcen umfassen: eine für die Wiederholungsübertragung verwendete Präambel und eine Direktzugriffssignalgelegenheit, RO, die zum wiederholten Übertragen der Präambel verwendet wird; und
Empfangen (S74, S75), durch die Netzwerkvorrichtung (01) von der Endgerätevorrichtung (02), einer Mehrzahl von PRACHs auf einer Mehrzahl von ROs von einem Strahl oder einer Mehrzahl von PRACHs auf ROs von einer Mehrzahl von Strahlen, wobei jeder der Mehrzahl von PRACHs dieselbe Präambel trägt;
wobei der eine Strahl ein stärkster Strahl ist oder die Mehrzahl von Strahlen einen stärksten Strahl umfasst, wobei der stärkste Strahl ein Strahl mit stärkster empfangener Signalstärke an der Endgerätevorrichtung (02) unter allen von der Netzwerkvorrichtung (01) übertragenen Strahlen ist; und
das Verfahren ferner umfasst:
Übertragen (S27, S76, S96), durch die Netzwerkvorrichtung (01), von Downlink-Daten an die Endgerätevorrichtung (02) auf dem stärksten Strahl;
wobei die Konfigurationsinformationen einen Präambel-Konfigurationsparameter umfassen und der Präambel-Konfigurationsparameter zum Erzeugen eines ersten Präambelressourcenpools verwendet wird, der eine oder mehrere für die Wiederholungsübertragung verwendete Präambeln umfasst; und
wobei der Präambel-Konfigurationsparameter umfasst: eine Menge an für die Wiederholungsübertragung verwendeten Präambeln, eine Menge an Bits, um die eine Wurzelsequenz der für die Wiederholungsübertragung verwendeten Präambel jedes Mal verschoben wird, und einen Wurzelindex der für die Wiederholungsübertragung verwendeten Präambel; oder
der Präambel-Konfigurationsparameter umfasst: einen Startindex der für die Wiederholungsübertragung verwendeten Präambel und eine Menge an für die Wiederholungsübertragung verwendeten Präambeln, und der erste Präambelressourcenpool durch Abtrennen des ersten Ressourcenpools von einem zweiten Ressourcenpool basierend auf dem Startindex der für die Wiederholungsübertragung verwendeten Präambel und der Menge an für die Wiederholungsübertragung verwendeten Präambeln erzeugt wird, wobei der zweite Ressourcenpool basierend auf den folgenden Parametern erzeugt wird: einer Menge an für eine Nicht-Wiederholungsübertragung verwendeten Präambeln, einer Menge an Bits, um die eine Wurzelsequenz der für die Nicht-Wiederholungsübertragung verwendeten Präambel jedes Mal verschoben wird, und einem Wurzelindex der für die Nicht-Wiederholungsübertragung verwendeten Präambel.

## Revendications

1. Procédé de transmission répétée de préambule, comprenant :
la réception (S21, S71, S91), par un dispositif terminal (02), d'informations de configuration en provenance d'un dispositif de réseau (01), dans lequel les informations de configuration indiquent des ressources de canal d'accès aléatoire physique, PRACH, qui sont sur un même faisceau ou des faisceaux différents et qui sont utilisées pour une transmission répétée, et les ressources de PRACH comprennent : un préambule utilisé pour la transmission répétée, et une occasion de signal d'accès aléatoire, RO, utilisée pour transmettre de manière répétée le préambule ; et
la transmission répétée (S26, S75, S95), par le dispositif terminal (02), du même préambule sur une pluralité de RO d'un faisceau ou sur des mêmes RO correspondantes d'une pluralité de faisceaux sur la base des informations de configuration ;
dans lequel les informations de configuration comprennent un paramètre de configuration de préambule ; et
le procédé comprend en outre :
la génération (S22, S72, S92), par le dispositif terminal (02), d'un premier pool de ressources sur la base du paramètre de configuration de préambule, le premier pool de ressources comprend un ou plusieurs préambules utilisés pour la transmission répétée, et le même préambule est un préambule sélectionné de manière aléatoire par le dispositif terminal (02) parmi le premier pool de ressources ;
dans lequel le paramètre de configuration de préambule comprend : une quantité de préambules utilisés pour la transmission répétée, une quantité de bits dont une séquence racine du préambule utilisé pour la transmission répétée est décalée à chaque fois, et un indice de racine du préambule utilisé pour la transmission répétée ; ou
dans lequel le paramètre de configuration de préambule comprend : un indice de début du préambule utilisé pour la transmission répétée, et une quantité de préambules utilisés pour la transmission répétée ; et
la génération (S22, S72, S92), par le dispositif terminal (02), d'un premier pool de ressources sur la base du paramètre de configuration de préambule comprend :
la séparation (S92), par le dispositif terminal (02), du premier pool de ressources d'avec un deuxième pool de ressources sur la base de l'indice de début du préambule utilisé pour la transmission répétée et de la quantité de préambules utilisés pour la transmission répétée, dans lequel
le deuxième pool de ressources est généré sur la base des paramètres suivants : une quantité de préambules utilisés pour une transmission sans répétition, une quantité de bits dont une séquence racine du préambule utilisé pour la transmission sans répétition est décalée à chaque fois, et un indice de racine du préambule utilisé pour la transmission sans répétition.

2. Procédé selon la revendication 1, dans lequel les informations de configuration comprennent : un premier paramètre et un deuxième paramètre, dans lequel le premier paramètre indique une quantité N de transmissions répétées de préambule sur le même faisceau, le deuxième paramètre indique un intervalle de RO auquel le préambule est transmis de manière répétée sur le même faisceau, et N est un nombre entier supérieur ou égal à 2 ; et
la transmission répétée (S26, S75, S95), par le dispositif terminal (02), du même préambule sur une pluralité de RO d'un faisceau sur la base des informations de configuration comprend :
la détermination (S94), par le dispositif terminal (02), de N RO dans le un faisceau sur la base du premier paramètre et du deuxième paramètre, et la transmission répétée (S26, S74, S95) du même préambule sur les N RO.

3. Procédé selon la revendication 2, dans lequel les N RO appartiennent à un même groupe, et le même groupe est un groupe sélectionné de manière aléatoire par le dispositif terminal (02) parmi des groupes compris dans le un faisceau ; et
avant la détermination (S94) de N RO dans le un faisceau, le procédé comprend en outre :
la détermination (S23), par le dispositif terminal (02), d'une quantité totale M de RO comprises dans le même faisceau au cours d'un temps prédéfini ; et
la détermination (S26), par le dispositif terminal (02) en utilisant la formule suivante, de chaque groupe qui est dans le même faisceau et qui est utilisé pour transmettre de manière répétée le préambule : $\left\{\left(s+nk\right)mod M\right\} ,$ dans lequel
s représente une 1ère RO mise en correspondance dans chaque groupe dans le même faisceau, n = (0, 1 ..., N - 1), k représente l'intervalle de RO auquel le préambule est transmis de manière répétée sur le même faisceau, mod est un opérateur modulo, et s ≤ M.

4. Procédé selon la revendication 3, dans lequel le temps prédéfini est une période de mise en correspondance ou une période de motif de mise en correspondance.

5. Procédé selon la revendication 3, dans lequel lorsque les informations de configuration comprennent en outre une règle prédéfinie, les RO comprises dans le même faisceau au cours du temps prédéfini sont triées selon une règle de premier domaine temporel puis de domaine fréquentiel ; ou lorsque les informations de configuration ne comprennent pas la règle prédéfinie, les RO comprises dans le même faisceau au cours du temps prédéfini sont triées selon une règle de premier domaine fréquentiel puis de domaine temporel.

6. Procédé selon la revendication 3, dans lequel
des ressources de domaine temporel des RO dans le un groupe sont les mêmes, et des ressources de domaine fréquentiel des RO dans le un groupe sont différentes ; ou
des ressources de domaine temporel des RO dans le un groupe sont différentes, et des ressources de domaine fréquentiel des RO dans le un groupe sont les mêmes ; ou
des RO qui sont dans le un groupe et qui ont des ressources de domaine temporel différentes et des ressources de domaine fréquentiel différentes existent.

7. Procédé selon l'une des revendications 2 à 6, dans lequel le un faisceau est un faisceau le plus fort, et le faisceau le plus fort est un faisceau avec la force de signal reçu la plus forte sur le dispositif terminal (02) parmi tous les faisceaux transmis par le dispositif de réseau (01).

8. Procédé selon l'une des revendications 2 à 7, dans lequel les informations de configuration comprennent en outre : un troisième paramètre, dans lequel le troisième paramètre indique s'il faut activer la transmission répétée du même préambule sur le même faisceau.

9. Procédé selon la revendication 1, dans lequel les informations de configuration comprennent : un quatrième paramètre, dans lequel le quatrième paramètre indique une quantité K de faisceaux pour une transmission répétée de préambule multi-faisceaux, et K est un nombre entier supérieur ou égal à 2 ; le paramètre de configuration de préambule comprend : la quantité de préambules utilisés pour la transmission répétée ; et
la transmission répétée (S26, S75, S95), par le dispositif terminal (02), du même préambule sur des mêmes RO correspondantes d'une pluralité de faisceaux sur la base des informations de configuration comprend :
la détermination, par le dispositif terminal (02), d'un préambule correspondant à chacun des K faisceaux sur la base du quatrième paramètre, du premier pool de ressources, et de la quantité de préambules utilisés pour la transmission répétée ; et
la transmission répétée (S26, S75, S95), par le dispositif terminal (02), du même préambule sur des mêmes RO correspondantes des K faisceaux, dans lequel les K faisceaux comprennent un faisceau le plus fort (S94), le faisceau le plus fort est un faisceau avec la force de signal reçu la plus forte sur le dispositif terminal (02) parmi tous les faisceaux transmis par le dispositif de réseau (01), et le même préambule est un préambule sélectionné de manière aléatoire par le dispositif terminal (02) parmi un préambule correspondant au faisceau le plus fort.

10. Procédé selon la revendication 9, dans lequel une quantité de préambules correspondant à chacun des K faisceaux est égale à : une valeur obtenue en divisant (S92) la quantité de préambules utilisés pour la transmission répétée par la quantité K.

11. Procédé selon la revendication 9, dans lequel le quatrième paramètre indique en outre de réutiliser le même préambule tous les K faisceaux.

12. Procédé selon la revendication 9, dans lequel
la force de signal des K faisceaux est supérieure à la force de signal d'un autre faisceau transmis par le dispositif de réseau (01).

13. Procédé selon la revendication 9, dans lequel les K faisceaux comprennent :
le faisceau le plus fort, un faisceau diffusé avant le faisceau le plus fort, et un faisceau diffusé après le faisceau le plus fort ; ou
le faisceau le plus fort, et un faisceau diffusé avant le faisceau le plus fort ; ou
le faisceau le plus fort, et un faisceau diffusé après le faisceau le plus fort.

14. Procédé selon l'une des revendications 9 à 12, dans lequel les informations de configuration comprennent en outre : un cinquième paramètre, dans lequel le cinquième paramètre indique s'il faut activer la transmission répétée du même préambule sur les faisceaux différents.

15. Procédé selon l'une des revendications 9 à 14, dans lequel
les mêmes RO correspondantes des K faisceaux sont : des RO qui ont un même numéro et qui sont des K faisceaux.

16. Procédé de transmission répétée de préambule, comprenant :
la transmission (S21, S71, S91), par un dispositif de réseau (01), d'informations de configuration à un dispositif terminal (02), dans lequel les informations de configuration indiquent des ressources de canal d'accès aléatoire physique, PRACH, qui sont sur un même faisceau ou des faisceaux différents et qui sont utilisées pour une transmission répétée, et les ressources de PRACH comprennent : un préambule utilisé pour la transmission répétée, et une occasion de signal d'accès aléatoire, RO, utilisée pour transmettre de manière répétée le préambule ; et
la réception (S74, S75), par le dispositif de réseau (01) en provenance du dispositif terminal (02), d'une pluralité de PRACH sur une pluralité de RO à partir d'un faisceau ou d'une pluralité de PRACH sur des RO à partir d'une pluralité de faisceaux, dans lequel chacun de la pluralité de PRACH porte le même préambule ;
dans lequel le un faisceau est un faisceau le plus fort, ou la pluralité de faisceaux comprennent un faisceau le plus fort, dans lequel le faisceau le plus fort est un faisceau avec la force de signal reçu la plus forte sur le dispositif terminal (02) parmi tous les faisceaux transmis par le dispositif de réseau (01) ; et
le procédé comprend en outre :
la transmission (S27, S76, S96), par le dispositif de réseau (01), de données de liaison descendante au dispositif terminal (02) sur le faisceau le plus fort ;
dans lequel les informations de configuration comprennent un paramètre de configuration de préambule, et le paramètre de configuration de préambule est utilisé pour générer un premier pool de ressources de préambule comprenant un ou plusieurs préambules utilisés pour la transmission répétée ; et
dans lequel le paramètre de configuration de préambule comprend : une quantité de préambules utilisés pour la transmission répétée, une quantité de bits dont une séquence racine du préambule utilisé pour la transmission répétée est décalée à chaque fois, et un indice de racine du préambule utilisé pour la transmission répétée ; ou
le paramètre de configuration de préambule comprend : un indice de début du préambule utilisé pour la transmission répétée, et une quantité de préambules utilisés pour la transmission répétée, et le premier pool de ressources de préambule est généré en séparant le premier pool de ressources d'avec un deuxième pool de ressources sur la base de l'indice de début du préambule utilisé pour la transmission répétée et de la quantité de préambules utilisés pour la transmission répétée, dans lequel le deuxième pool de ressources est généré sur la base des paramètres suivants : une quantité de préambules utilisés pour une transmission sans répétition, une quantité de bits dont une séquence racine du préambule utilisé pour la transmission sans répétition est décalée à chaque fois, et un indice de racine du préambule utilisé pour la transmission sans répétition.
